(19) **Europäisches Patentamt European Patent Office Office européen des brevets**

(11) **EP 3 547 057 B1**

(12) **EUROPEAN PATENT SPECIFICATION**

(45) Date of publication and mention
of the grant of the patent:
**26.11.2025 Bulletin 2025/48**

(21) Application number: **19156772.6**

(22) Date of filing: **12.02.2019**

(51) International Patent Classification (IPC):
***G05B 23/02*** *(2006.01)*

(52) Cooperative Patent Classification (CPC):
**G05B 23/024; G05B 23/0216; G05B 23/0221;
G05B 23/0235; G05B 23/0254**

(54) **ABNORMALITY DETECTION SYSTEM, SUPPORT DEVICE, AND ABNORMALITY DETECTION METHOD**

ANOMALIEDETEKTIONSSYSTEM, UNTERSTÜTZUNGSVORRICHTUNG UND ANOMALIEDETEKTIONSVERFAHREN

SYSTÈME DE DÉTECTION D'ANOMALIES, DISPOSITIF DE SUPPORT, ET PROCÉDÉ DE DÉTECTION D'ANOMALIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018068167**

(43) Date of publication of application:
**02.10.2019 Bulletin 2019/40**

(73) Proprietor: **Omron Corporation
Kyoto-shi, Kyoto 600-8530 (JP)**

(72) Inventors:
• **KAWANOUE, Shinsuke
Kyoto-shi, Kyoto (JP)**
• **MIYAMOTO, Kota
Kyoto-shi, Kyoto (JP)**

(74) Representative: **Emde, Eric
Wagner & Geyer Partnerschaft mbB
Patent- und Rechtsanwälte
Gewürzmühlstrasse 5
80538 München (DE)**

(56) References cited:
**EP-A1- 1 021 263       EP-A2- 2 884 363
EP-B1- 1 021 263       WO-A2-2018/030422**

## EP 3 547 057 B1

### Description

### BACKGROUND

Technical Field

The present technology relates to an abnormality detection system for detecting an abnormality that may occur in a monitoring target, a support device that is connected to the abnormality detection system, and an abnormality detection method that is used in the abnormality detection system.

Description of Related Art

In various production sites, there is a need to improve the facility operating ratio through predictive maintenance for machines or devices. Predictive maintenance means a maintenance form in which maintenance work such as reorganization or replacement is performed before the facility is stopped by detecting any abnormalities occurring in a machine or a device.

In order to realize such predictive maintenance, a mechanism for collecting state values of a machine or a device and determining whether or not an abnormality has occurred in the machine or the device on the basis of the collected state values has been proposed.

For example, Japanese Patent Application Laid-Open No. 07-043352 (Patent Document 1) discloses a method of measuring values regarding a plurality of diagnosis parameters for a group of diagnosis targets of which properties are divided into normal and abnormal properties, performing a statistical process on these measured values, extracting a diagnosis parameter predicted to be a valid parameter from the processing results, determining a determination level on the basis of a measured value for the extracted valid diagnosis parameter, and sequentially updating a combination of valid parameters and the determination level until a target correct answer rate is obtained.

Patent Documents

[Patent Document 1] Japanese Patent Application Laid-Open No. 07-043352 EP 1 021 263 discloses a method of monitoring the operation of a continuous caster in which a multivariate statistical model is developed using off-line measurements of process parameters representing normal operation of the continuous caster. On-line process parameters are measured in real time to determine if the caster operation is normal by calculating test statistics on vectors calculated using the multivariate statistical model with input from the on-line process parameters. EP 2 884 363 discloses a method of detecting anomaly in a facility or an apparatus by using multi-dimensional time series sensor signals outputted from sensors attached to the facility or apparatus during operation, comprising: a step of generating anomaly model by using sensor signals in a pre-designated period out of the multidimensional time series sensor signals and calculating anomaly determining thresholds; a step of extracting feature vectors from the multidimensional time series sensor signals as observed vectors; a step of calculating anomaly measurements of the observed vectors by using the extracted observed vectors and the generated normal model; and a step of detecting any anomaly in the facility or apparatus by comparing the calculated anomaly measurements of the observed vectors and the anomaly determining thresholds, wherein: the normal model is generated by using multidimensional time series sensor signals cleared of signals of some periods in the pre-designated period out of all the multi-dimensional time series sensor signals.

Further attention is drawn to WO 2018/030422 A2 describing a diagnosis device wherein a first acquiring unit acquires, from a target device, context information corresponding to a current operation; a second acquiring unit acquires detection information output from a detecting unit that detects a physical quantity that changes according to operations performed by the target device; a first transmitting unit transmits the acquired context information to a learning device; a second transmitting unit transmits the acquired detection information to the learning device; a third acquiring unit acquires a model corresponding to the transmitted context information, from the learning device that determines whether any pieces of context information are identical or similar to each other and combines models generated from pieces of the detection information corresponding to the pieces of identical or similar context information; and a first determining unit determines whether an operation performed by the target device is normal by using the detection information and the model.

### SUMMARY

The present invention is set forth in the independent claims, respectively. Further embodiments of the invention are described in the dependent claims.

Considering application of predictive maintenance to actual production sites, it is difficult to classify properties of a diagnosis target group into "normal" or "abnormal", as disclosed in Japanese Patent Application Laid-Open No.

2

07-043352 (Patent Document 1). This is because actual machines or devices often gradually deteriorate, and a determination reference regarding how much deterioration should be regarded as "abnormal" is arbitrarily determined according to characteristics or a degree of importance of the machine or device that is a target, and a required maintenance level.

There is a need to flexibly set a determination reference suitable for application of predictive maintenance to actual production sites. One objective of the present technology is to satisfy such a need.

An abnormality detection system according to claim 1 is provided.

According to this disclosure, since a plurality of determination references can be applied to the score and respective determination results can be output, application of predictive maintenance to an actual production site can be flexibly performed.

In the above disclosure, the first determination reference may be set to correspond to a case where the score indicates a higher value as compared with the second determination reference. The first determination result corresponding to the first determination reference indicates that a degree of abnormality is higher as compared with the second determination result corresponding to the second determination reference.

According to this disclosure, since each determination result can be obtained according to a degree of abnormality, a maintenance worker or the like performs maintenance work according to the priority according to content of any determination result when the determination result is output.

In the above disclosure, the abnormality detection system may further include a state value storage unit that stores at least a state value related to the monitoring target among the state values collected by the control computing unit; a second abnormality detection unit that executes substantially the same detection process as the first abnormality detection unit using the state value provided from the state value storage unit; and a model generation unit that determines the abnormality detection parameters and the learning data set that are set for the first abnormality detection unit on the basis of a detection result of the second abnormality detection unit.

According to this disclosure, a model that allows execution of abnormality detection offline can be generated using the second abnormality detection unit that performs substantially the same detection processing as the first abnormality detection unit.

In the above disclosure, the model generation unit may include a means for displaying a data series of the score calculated by one or a plurality of feature quantities that are generated from the state values provided from the state value storage unit; and a means for receiving a setting of two threshold values for the data series of the score as the first determination reference and the second determination reference.

According to this disclosure, the user can set a plurality of appropriate threshold values as determination references while referring to the data series of scores.

In the above disclosure, the model generation unit may include a means that calculates an index value indicating a detection accuracy on the basis of a label assigned to each element included in the data series of the score and a determination result when a determination reference designated by a user has been applied to the data series of the score.

According to this disclosure, when the user sets a determination references designated by the user, the user can objectively ascertain detection accuracy according to the set determination reference.

In the above disclosure, the index value indicating the detection accuracy may include at least one of an overlook rate that is a probability of determining that an element to which a label of abnormal has been assigned is normal, an oversight rate that is a probability of determining that an element to which a label of normal has been assigned is abnormal, and a correct answer rate that is a probability that a determination according to the label assigned to the element is performed.

According to this disclosure, the user can ascertain the detection accuracy quantitatively. In the above disclosure, the model generation unit may update an index value indicating the detection accuracy when a set threshold value is changed.

According to this disclosure, each time the user changes the threshold value in a trial-and-error manner, detection accuracy at that time can be ascertained each time. Therefore, work of setting the threshold value can be made more efficient.

In the above disclosure, the abnormality detection system may further include a notification device that performs a notification operation in a form according to a determination result from the determination unit.

According to this disclosure, it is possible to ascertain for which of a plurality of determination references a notification is performed at a glance.

According to another example of the present disclosure, a support device according to claim 7 is provided.

According to this disclosure, since a plurality of determination references can be applied to the score and respective determination results can be output, application of predictive maintenance to an actual production site can be flexibly performed.

An abnormality detection method according to still another example of the present disclosure includes executing control computation for controlling a control target; and providing a state value related to a monitoring target among state values collected regarding the control computation to a model indicating the monitoring target that is defined by abnormality detection parameters and a learning data set, to detect an abnormality that may occur in the monitoring target, the detecting of an abnormality includes calculating a score using a feature quantity that is calculated from a state value related to the monitoring target according to the abnormality detection parameters; performing a determination using the calculated score and a first determination reference and a second determination reference included in the abnormality detection parameters; outputting a first determination result when the calculated score matches the first determination reference, and outputting a second determination result when the calculated score matches the second determination reference.

According to this disclosure, since a plurality of determination references can be applied to the score and respective determination results can be output, application of predictive maintenance to an actual production site can be flexibly performed.

According to the present technology, it is possible to flexibly set a plurality of determination references according to needs of predictive maintenance at an actual production site.

## BRIEF DESCRIPTION OF THE DRAWINGS

FIG. 1 is a schematic diagram illustrating an example of a functional configuration of an abnormality detection system according to an embodiment.

FIG. 2 is a schematic diagram illustrating an example of an overall configuration of the abnormality detection system according to the embodiment.

FIG. 3 is a schematic diagram illustrating an overview of a processing procedure for operating the abnormality detection system according to the embodiment.

FIG. 4 is a block diagram illustrating an example of a hardware configuration of a control device constituting the abnormality detection system according to the embodiment.

FIG. 5 is a block diagram illustrating an example of a hardware configuration of a support device constituting the abnormality detection system according to the embodiment.

FIG. 6 is a block diagram illustrating an example of a software configuration of the abnormality detection system according to the embodiment.

FIG. 7 is a block diagram illustrating an overview of functional modules included in an analysis tool illustrated in FIG. 6.

FIG. 8 is a schematic diagram illustrating a basic idea of an abnormality detection process of the abnormality detection system according to the embodiment.

FIG. 9 is a schematic diagram schematically illustrating a processing procedure in the abnormality detection process of the abnormality detection system according to the embodiment.

FIG. 10 is a flowchart showing a processing procedure of the abnormality detection process that is executed in the control device according to the embodiment.

FIG. 11 is a schematic diagram illustrating content of an analysis process (ST2) that is included in the processing procedure illustrated in FIG. 3.

FIG. 12 is a schematic diagram visually illustrating an overview of processes (a) to (e) illustrated in FIG. 11.

FIG. 13 is a flowchart showing a procedure example of a setting operation that is performed by a user in a model generation process according to the embodiment.

FIG. 14 is a schematic diagram illustrating an example of a user interface screen that is provided to a user in step S10 of FIG. 13.

FIG. 15 is a schematic diagram illustrating an example of a user interface screen that is provided to a user in steps S12 to S16 in FIG. 13.

FIG. 16 is a flowchart showing a processing procedure that is executed by the analysis tool of the support device according to the embodiment.

FIG. 17 is a schematic diagram illustrating a process of evaluating a degree of importance of a feature quantity that is executed by the analysis tool of the support device according to the embodiment.

FIG. 18 is a schematic diagram illustrating a process of adding virtual data to a learning data set in the analysis tool of the support device according to the embodiment.

FIG. 19 is a schematic diagram illustrating an example of virtual data that is generated by the analysis tool of the support device according to the embodiment.

FIG. 20 is a schematic diagram illustrating an example of index values for calculating detection accuracy that is calculated in the abnormality detection process according to the embodiment.

FIG. 21 is a schematic diagram illustrating an AUC calculation process in an abnormality detection process according to the embodiment.

FIG. 22 is a schematic diagram illustrating a process related to an automatic setting of a threshold value in the abnormality detection process according to the embodiment.

FIG. 23 is a flowchart showing a more detailed processing procedure related to an automatic threshold value setting shown in step S140 of the flowchart illustrated in FIG. 16.

FIG. 24 is a schematic diagram illustrating an example of a display of an index value indicating detection accuracy.

FIG. 25 is a schematic diagram illustrating an example of a display of an index value indicating detection accuracy.

## DESCRIPTION OF THE EMBODIMENTS

Embodiments of the disclosure will be described in detail with reference to the drawings. In the drawings, the same or corresponding units are denoted by the same reference numerals, and description thereof will not be repeated.

<A. Example of application>

First, an example of a scene to which the disclosure is applied will be described.

An example of a functional configuration of a control system having an abnormality detection function according to the embodiment will be described. Since an abnormality detection function of a control system will be mainly described hereinafter, the entire control system is also referred to as an "abnormality detection system".

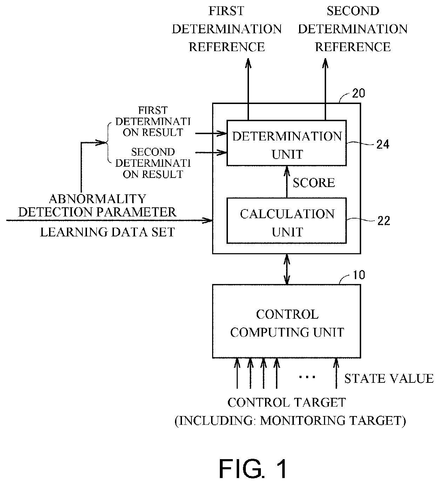

FIG. 1 is a schematic diagram illustrating an example of a functional configuration of an abnormality detection system 1 according to the embodiment. Referring to FIG. 1, the abnormality detection system 1 includes a control computing unit 10 and an abnormality detection unit 20. Basically, configurations thereof are implemented using a control device such as a programmable controller (PLC).

The control computing unit 10 executes control computing for controlling a control target. The abnormality detection unit 20 provides a state value related to a monitoring target among state values collected by the control computing unit 10 to a model indicating the monitoring target that is defined by abnormality detection parameters and a learning data set, to detect an abnormality that may occur in the monitoring target.

In the present specification, "state value" is a term including a value that can be observed in any control target (including a monitoring target), and includes, for example, a physical value that can be measured by any sensor, an ON/OFF state of a relay, a switch, or the like, a command value of a position, speed, torque, or the like that the PLC provides to a servo driver, and a variable value that is used by the PLC for calculation.

In the present specification, "abnormality detection parameter" and "learning data set" include a definition of a model for detecting an abnormality that may occur in the monitoring target. According to the invention, the abnormality detection parameter and the learning data set are generated in the support device, and the generated abnormality detection parameter and learning data set are provided to the control device from the support device. Detailed procedures and processes regarding generation of the abnormality detection parameter and the learning data set will be described below.

The abnormality detection unit 20 includes a calculation unit 22 that calculates a score using a feature quantity that is calculated from a state value related to the monitoring target according to the abnormality detection parameter.

In the present specification, a "score" means a value indicating a degree of probability of one or a plurality of feature quantity sets of evaluation targets being outliers or abnormal values. The score is calculated such that the probability of the feature quantity being an abnormal value increases as a value of the score becomes greater (however, the score may be indicated as a smaller value when the probability of the feature quantity being the abnormal value increases). The method of calculating the score in the calculation unit 22 will be described in detail below.

The abnormality detection unit 20 further includes a determination unit 24 that performs a determination using the score calculated by the calculation unit 22 and a first determination reference and a second determination reference included in the abnormality detection parameter, outputs a first determination result when the score matches the first determination reference, and outputs a second determination result when the score matches the second determination reference.

Thus, the abnormality detection system according to the embodiment can apply a plurality of determination references to the score and evaluate the presence or absence of abnormality using each determination reference. The level of abnormality (for example, a state of progress of deterioration) occurring in the monitoring target can be estimated by appropriately setting respective determination references. By adopting such a function, determination references suitable for application of predictive maintenance to an actual production site can be flexibly set.

<B. Example of an overall configuration of system>

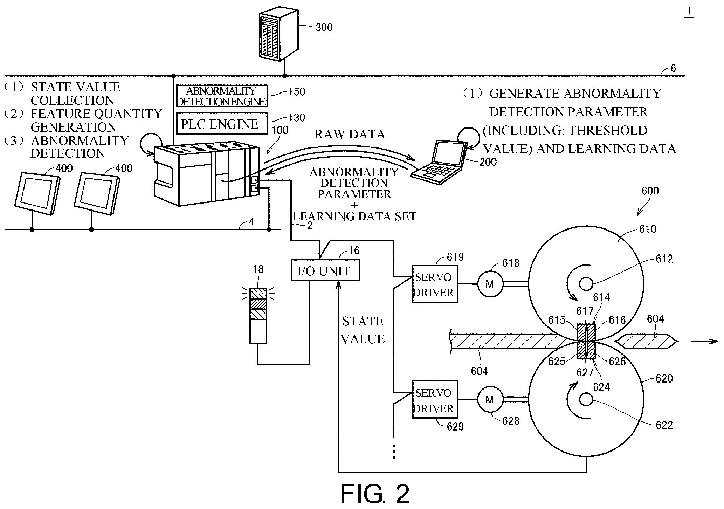

First, an example of an overall configuration of the abnormality detection system 1 according to the embodiment will be described. FIG. 2 is a schematic diagram illustrating an example of the overall configuration of the abnormality detection system 1 according to the embodiment.

Referring to FIG. 2, the abnormality detection system 1 according to the invention includes a control device 100 that controls a control target and a support device 200 that is connected to the control device 100 as main components. FIG. 2 illustrates an example of a configuration in which the abnormality detection system 1 sets a packaging machine 600 as an abnormality detection target (hereinafter also referred to as a "monitoring target").

The control device 100 may be embodied as a type of computer such as a PLC. The control device 100 is connected to one or a plurality of field devices disposed in the control target via the field network 2 and connected to one or a plurality of operation display devices 400 via another field network 4.

The control device 100 may also be connected to a database server 300 via an upper network 6. The control device 100 exchanges data with the connected devices via respective networks. It should be noted that the database server 300 and the operation display device 400 are optional configurations and are not indispensable components of the abnormality detection system 1.

It is preferable for an industrial network to be adopted for the field network 2 and the field network 4. As such industrial networks, EtherCAT (registered trademark), EtherNet/IP (registered trademark), DeviceNet (registered trademark), CompoNet (registered trademark), and the like are known.

The control device 100 includes a processing unit (hereinafter also referred to as an "abnormality detection engine 150") that monitors the presence or absence of an abnormality with respect to any monitoring target, in addition to a control computing unit (hereinafter also referred to as a "PLC engine 130") that executes control computing for controlling the control target. With respect to the abnormality detection engine 150, the control device 100 executes (1) a process of collecting a state value from the monitoring target, (2) a process of generating one or a plurality of feature quantities from the collected state value, and (3) a process of detecting an abnormality on the basis of the generated feature quantities.

When the abnormality detection engine 150 of the control device 100 detects any abnormality, a notification of content of the detection may be performed using any method. In the configuration illustrated in FIG. 2, an example in which a notification is performed by blinking and/or ringing the notification device 18 connected via the I/O unit 16 is shown. A notification method is not limited to the notification device 18, and a notification using any indicator, sound output device, speech synthesis device, e-mail, any terminal, and the like can be used.

In order to realize the abnormality detection engine 150 with high detection accuracy in the control device 100, it is necessary to appropriately set a feature quantity or a determination reference (typically, a threshold value) according to characteristics of the monitoring target. In the abnormality detection system 1 according to the embodiment, when it is determined that the collected state value indicates characteristics different from normal ones using a statistical scheme, it is detected that the monitoring target is abnormal.

In order to realize such an abnormality detection engine 150, (1) an abnormality detection parameter including a feature quantity used for abnormality detection and a determination reference (typically, a threshold value) for determining whether or not there is an abnormality, and (2) a learning data set including one or a plurality of state values and/or feature quantities that appear when the monitoring target is normal are prepared. Accordingly, the abnormality detection engine 150 provides a state value related to a monitoring target among state values collected by the PLC engine 130 to a model indicating the monitoring target that is defined by an abnormality detection parameter and a learning data set, to detect an abnormality that may occur in the monitoring target.

It should be noted that although a form in which one or a plurality of threshold values are used is illustrated as a typical example of the determination references in the following description, the determination reference is not limited to a threshold value and may be an allowable range having any width or a condition defined by a plurality of values.

Although preparation of the abnormality detection parameter and the learning data set may be performed by any device, the abnormality detection parameter and the learning data set are determined by providing the state value (collected data) collected by the control device 100 to the support device 200 and by the support device 200 executing an analysis process as will be described below in the configuration illustrated in FIG. 2.

As will be described below, one or a plurality of threshold values for abnormality detection can be determined in the abnormality detection system 1 according to the embodiment. The presence or absence of an abnormality is monitored using each of the determined threshold values. For example, it is practical to set threshold values in two levels (an attention level and a warning level or a caution level and a damage level).

Thus, when at least the first determination reference and the second determination reference are set, the first determination reference may be set to correspond to a case in which the score indicates a higher value as compared with the second determination reference. In this case, the first determination result (for example, a warning level) corresponding to the first determination reference may indicate that the degree of abnormality is higher as compared with the second determination result (an attention level) corresponding to the second determination reference.

As described above, the abnormality detection system 1 may include the notification device 18 that performs a notification operation. In this case, the notification operation may be performed in a form according to the determination result of the abnormality detection engine 150 of the control device 100. That is, in the notification device 18, an attention level notification form and a warning level notification form may be made different. For example, in a case in which the notification device 18 capable of a plurality of notification forms is used, a lighting display or a blinking display may be performed with "yellow" when a threshold value of the attention level has been reached, and a lighting display or a blinking display may be performed with "red" when a threshold value of the warning level has been reached.

On the other hand, the support device 200 sets the determined abnormality detection parameter and learning data set in the abnormality detection engine 150 of the control device 100. Specifically, the abnormality detection parameter (including one or a plurality of threshold values) and the learning data set are given from the support device 200 to the control device 100.

It should be noted that a configuration in which the control device 100 and the support device 200 are integrated may be adopted, and in this case, both of the determination of the abnormality detection parameter and the learning data set and the abnormality detection process are executed in a single device.

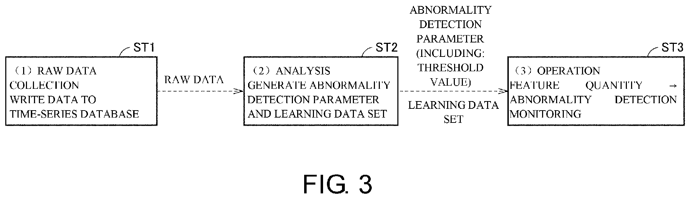

FIG. 3 is a schematic diagram illustrating an overview of a processing procedure for operating the abnormality detection system 1 according to the embodiment. Referring to FIG. 3, a process of collecting raw data is first executed in the control device 100 (ST1). In the following description, "raw data" means time series data of state values collected from the monitoring target. Basically, the "raw data" includes the state value as it is, which is collected from the monitoring target, and does not include the feature quantity or the like generated from the state value. The collection of this raw data is realized by sequentially loading the state values into a time-series database (hereinafter also abbreviated as a "TSDB") implemented in the control device 100.

The collected raw data is provided to the support device 200 and an analysis process is executed (ST2). In this analysis process, the abnormality detection parameter and the learning data set are generated. In the following description, a process of generating the abnormality detection parameter and the learning data set according to the monitoring target may be referred to as "model generation process".

The generated abnormality detection parameter and learning data set are provided to the control device 100. On the basis of the abnormality detection parameter and the learning data set from the support device 200, the control device 100 starts an operation of abnormality detection (ST3). In this case, the control device 100 (the abnormality detection engine 150) generates a feature quantity on the basis of the state value collected from the monitoring target according to the given abnormality detection parameter, and executes abnormality detection on the basis of the generated feature quantity.

More detailed processing and functions regarding the abnormality detection as described above will be described below. Referring back to FIG. 2, the packaging machine 600 that is a monitoring target in the configuration illustrated in FIG. 2 executes a sealing process and/or a cutting process for a package body 604 that is transported in a predetermined transport direction. The packaging machine 600 includes a pair of rotors 610 and 620 rotating synchronously. Each rotor is disposed so that a tangential direction of an outer circumference at a position in contact with the package body 604 matches the transport direction, and a surface of the rotor comes into contact with the package body 604, thereby sealing and/or cutting the package body 604.

The rotors 610 and 620 of the packaging machine 600 are driven to rotate synchronously around rotary shafts 612 and 622 by servomotors 618 and 628, respectively. Processing mechanisms 614 and 624 are provided on surfaces of the rotors 610 and 620, respectively, and the processing mechanism 614 includes heaters 615 and 616 arranged in front and behind in a circumferential direction (a rotation direction), and a cutter 617 arranged between the heater 615 and the heater 616. Similarly, the processing mechanism 624 includes heaters 625 and 626 arranged in front and behind in the circumferential direction, and a cutter 627 arranged between the heater 625 and the heater 626. The rotors 610 and 620 include the cutters 617 and 627 arranged on outer peripheral surfaces thereof for cutting the package body 604.

When the rotors 610 and 620 rotate in synchronism with a transport speed of the package body 604, facing surfaces (an upper surface and a lower surface) at a position on the right side of a paper surface of the package body 604 are sealed (adhered) by the heater 615 and the heater 625, and facing surfaces (an upper surface and a lower surface) at a position on the left side of a paper surface of the package body 604 are sealed (adhered) by the heater 616 and the heater 626. In parallel with the sealing process, the package body 604 is cut by the cutter 617 and the cutter 627. By repeating such a series of processes, sealing and cutting are repeatedly performed on the package body 604 including a packed object 605, and individual wrapped bodies 606 are sequentially generated.

A rotation speed, torque, and the like of the servo motors 618 and 628 that rotationally drive the rotors 610 and 620 are controlled by servo drivers 619 and 629, which are examples of drivers (drive devices). The control device 100 can collect state values of the packaging machine 600 from the servo drivers 619 and 629 and the I/O unit 16. Examples of the state values of the packaging machine 600 include a rotation position (phase/rotation angle) of the rotors 610 and 620, (2) a speed of the rotors 610 and 620, (3) accelerations of the rotors 610 and 620, (4) torque values of the servo motors 618 and 628, (5) current values of the servo drivers 619 and 629, and (6) voltage values of the servo drivers 619 and 629.

The control device 100 performs abnormality detection on the packaging machine 600 on the basis of the state values from the packaging machine 600. When the abnormality detection is performed, a plurality of state values can be collected from the packaging machine 600, and it is necessary to determine which state value should be used in advance. Further, it is possible to use each collected state value (time series data) as it is or it is also possible to extract some feature quantities from the time series data of the state value and use the feature quantities.

In the model generation process according to the invention, which state value among the one or a plurality of state values collected from the monitoring target is to be used and/or what kind of feature quantity of the collected state value is to be used is determined using the abnormality detection parameter.

<C. Example of hardware configuration of control device 100>

Next, an example of a hardware configuration of main devices constituting the abnormality detection system 1 according to the embodiment will be described.

(c1: Example of hardware configuration of control device 100)

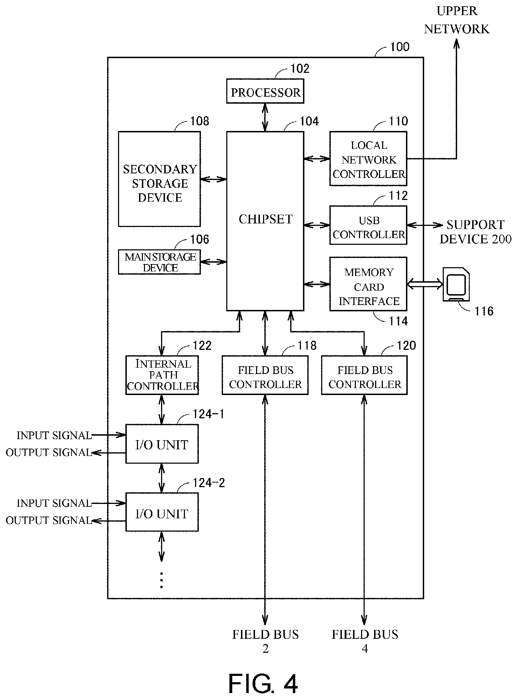

FIG. 4 is a block diagram illustrating an example of a hardware configuration of the control device 100 constituting the abnormality detection system 1 according to the embodiment. Referring to FIG. 4, the control device 100 includes, for example, a processor 102 such as a central processing unit (CPU) or a micro-processing unit (MPU), a chip set 104, a main storage device 106, a secondary storage device 108, an upper network controller 110, a universal serial bus (USB) controller 112, a memory card interface 114, an internal bus controller 122, field bus controllers 118 and 120, and I/O units 124-1 and 124-2.

The processor 102 reads various programs stored in the secondary storage device 108, develops the programs in the main storage device 106, and executes the programs to realize the PLC engine 130 and the abnormality detection engine 150. The chipset 104 controls, for example, data transmission between the processor 102 and each component.

A user program to be executed using the PLC engine 130 is stored in the secondary storage device 108, in addition to a system program for realizing the PLC engine 130. Further, a program for realizing the abnormality detection engine 150 is also stored in the secondary storage device 108.

The upper network controller 110 controls exchanges of data with other devices via the upper network 6. The USB controller 112 controls exchanges of data with the support device 200 via a USB connection.

The memory card interface 114 is configured so that a memory card 116 can be attached and detached to and from the memory card interface 114, and can write data to the memory card 116 and read various pieces of data (user program, trace data, or the like) from the memory card 116.

The internal bus controller 122 is an interface that exchanges data with the I/O units 124-1, 124-2, ... mounted in the control device 100.

The field bus controller 118 controls exchange of data with other devices via the first field network 2. Similarly, the field bus controller 120 controls exchange of data with other devices via the field network 4.

Although an example of a configuration in which the necessary functions are provided by the processor 102 executing the program has been illustrated in FIG. 4, some or all of the provided functions may be implemented using a dedicated hardware circuit (for example, an application specific integrated circuit (ASIC) or a field-programmable gate array (FPGA)). Alternatively, main units of the control device 100 may be realized using hardware conforming to a general-purpose architecture (for example, an industrial personal computer on the basis of a general-purpose personal computer). In this case, a plurality of operating systems (OSs) having different uses may be executed in parallel using a virtualization technique, and necessary applications may be executed on each OS.

(c2: Example of hardware configuration of support device 200)

The support device 200 according to the embodiment is realized by executing a program using hardware (for example, a general-purpose personal computer) according to a general-purpose architecture as an example.

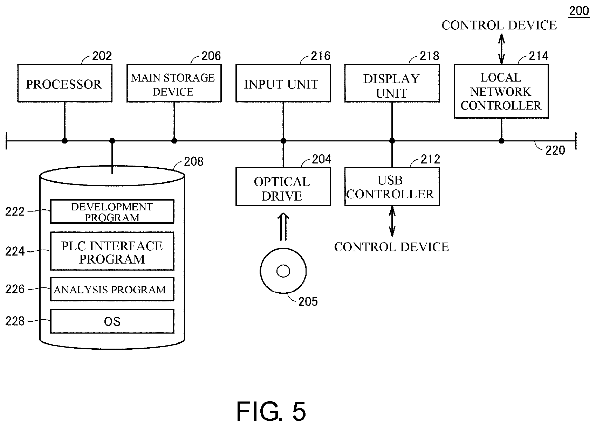

FIG. 5 is a block diagram illustrating an example of a hardware configuration of the support device 200 constituting the abnormality detection system 1 according to the embodiment. Referring to FIG. 5, the support device 200 includes a processor 202 such as a CPU or an MPU, an optical drive 204, a main storage device 206, a secondary storage device 208, a USB controller 212, an upper network controller 214, an input unit 216, and a display unit 218. These components are connected via bus 220.

The processor 202 reads various programs stored in the secondary storage device 208, develops the programs in the main storage device 206, and executes the programs, thereby realizing various processes, including a model generation process as will be described below.

The secondary storage device 208 includes, for example, a hard disk drive (HDD) or a flash solid state drive (SSD). Typically, a development program 222 for performing creation of a user program to be executed in the support device 200, debug of the created program, definition of a system configuration, a setting of various parameters, and the like, a PLC interface program 224 for exchanging data on the abnormality detection function with the control device 100, an analysis program 226 for realizing the model generation process according to the embodiment, and an OS 228 are stored in the secondary storage device 208. A necessary program other than the program illustrated in FIG. 5 may be stored in the secondary storage device 208.

The support device 200 includes the optical drive 204, and a stored computer-readable program is read from a recording medium 205 (for example, an optical recording medium such as a digital versatile disc (DVD)) that non-transiently stores the computer-readable program and installed in the secondary storage device 208 or the like.

Various programs that are executed by the support device 200 may be installed via the computer-readable recording medium 205, but the programs may be installed in a form in which the program is downloaded from a server device or the like on a network. In addition, the functions provided by the support device 200 according to the embodiment may be realized in a form in which some of modules provided by an OS are used.

The USB controller 212 controls exchange of data with the control device 100 via a USB connection. The upper network controller 214 controls exchanges of data with other devices via any network.

The input unit 216 includes a keyboard, a mouse, or the like, and receives a user operation. The display unit 218 includes a display, various indicators, a printer, and the like, and outputs a processing result and the like from the processor 202.

Although the configuration example in which necessary functions are provided by the processor 202 executing a program is illustrated in FIG. 5, some or all of the provided functions may be implemented by a dedicated hardware circuit (for example, an ASIC or an FPGA).

<D. Example of software configuration /example of functional configuration>

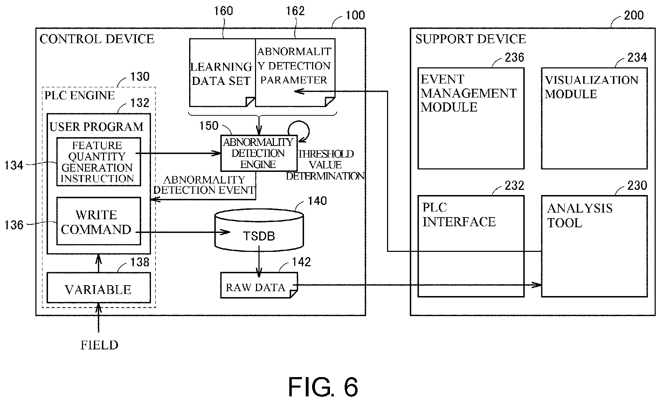

Next, an example of a software configuration and an example of a functional configuration of main devices constituting the abnormality detection system 1 according to the embodiment will be described. FIG. 6 is a block diagram illustrating an example of a software configuration of the abnormality detection system 1 according to the embodiment.

Referring to FIG. 6, the control device 100 includes a PLC engine 130, a time series database (TSDB) 140, and an abnormality detection engine 150 as main functional configurations.

The PLC engine 130 sequentially interprets the user program 132 and executes designated control computation. The PLC engine 130 manages the state value collected from a field in the form of a variable 138, and the variable 138 is updated at a predetermined cycle. The PLC engine 130 may be realized by the processor 102 of the control device 100 executing the system program.

In implementing the abnormality detection system 1 according to the embodiment, the user program 132 includes a feature quantity generation instruction 134 and a write command 136.

The feature quantity generation command 134 includes a command to generate a feature quantity (for example, an average value, a maximum value, a minimum value, or the like over a predetermined time) according to a predetermined process with respect to a predetermined state value. The generated feature quantity is used for the abnormality detection process in the abnormality detection engine 150.

The write command 136 includes a command to write the collected state value (the variable 138) to the time-series database 140.

The state values sequentially written to the time series database 140 are output as raw data 142. As will be described below, a part of the raw data 142 stored in the time-series database 140 is also used in the model generation process in the support device 200. Thus, the time-series database 140 corresponds to a state value storage unit that stores at least the state value related to the monitoring target among the state values collected by the PLC engine 130.

The abnormality detection engine 150 monitors the presence or absence of an abnormality of the monitoring target according to the abnormality detection parameter 162 using learning data set 160 given in advance as a model indicating a monitoring target. More specifically, the abnormality detection engine 150 compares each threshold value included in the abnormality detection parameter 162 with a value (a score as will be described below) indicating a probability of abnormality that is calculated from the collected state value (threshold determination).

In the abnormality detection engine 150, when it is determined that any abnormality has occurred in the monitoring target (that is, when the score exceeds or falls below a predetermined threshold value), the PLC engine 130 is notified of the occurrence of abnormality (occurrence of an abnormality detection event) or a predetermined variable 138 is updated to a value indicating abnormality.

On the other hand, the support device 200 includes an analysis tool 230, a PLC interface 232, a visualization module 234, and an event management module 236 as main functional configurations.

The analysis tool 230 analyzes the raw data 142 including the state values collected by the control device 100 and determines the learning data set 160 and the abnormality detection parameter 162. The analysis tool 230 is typically realized by the processor 202 of the support device 200 executing the analysis program 226.

The PLC interface 232 performs a process of acquiring the raw data 142 from the control device 100 and a process of transmitting the determined learning data set 160 and abnormality detection parameter 162 to the control device 100. The PLC interface 232 is typically realized by the processor 202 of the support device 200 executing the analysis program 226.

The visualization module 234 visualizes the information provided by the analysis tool 230 as a screen user interface and receives an operation from the user.

The event management module 236 causes each module to execute a necessary process according to an event occurring inside or outside the support device 200.

The visualization module 234 and the event management module 236 are typically provided as functions included in an OS.

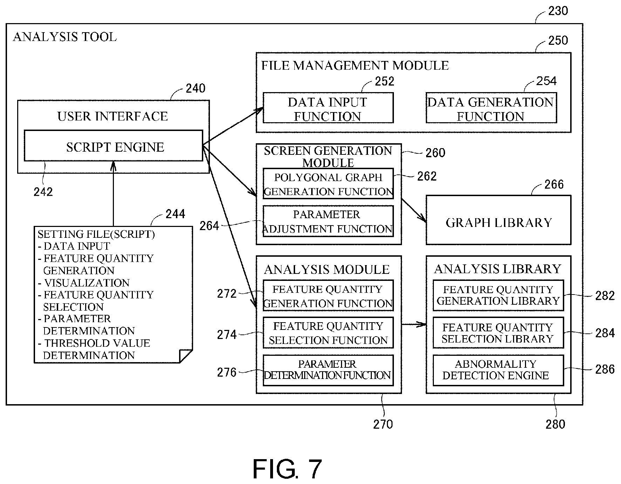

FIG. 7 is a block diagram illustrating an overview of functional modules included in the analysis tool 230 illustrated in FIG. 6. Referring to FIG. 7, the analysis tool 230 of the support device 200 includes a user interface 240, a file management module 250, a screen generation module 260, an analysis module 270, and an analysis library 280 as main functional configurations.

The user interface 240 receives a setting from the user and executes an overall process of providing various pieces of information to the user. As a specific implementation form, the user interface 240 has a script engine 242, reads a setting file 244 including a script describing a necessary process, and executes the set process.

The file management module 250 includes a data input function 252 for reading data from a designated file or the like, and a data generation function 254 for generating a file including generated data or the like.

The screen generation module 260 includes a polygonal line generation function 262 for generating a polygonal line on the basis of input data or the like, and a parameter adjustment function 264 for receiving a user operation and changing various parameters. As the parameters are changed, the polygonal line generation function 262 may update the polygonal line. The polygonal line generation function 262 and the parameter adjustment function 264 execute necessary processes by referring to the graph library 266.

The analysis module 270 is a module that realizes a main process of the analysis tool 230, and includes a feature quantity generation function 272, a feature quantity selection function 274, and a parameter determination function 276.

The feature quantity generation function 272 generates a feature quantity from the time series data of any state value included in the raw data 142. The feature quantity selection function 274 executes a process of selecting a feature quantity to be used for an abnormality detection process and a process of receiving a selection of a feature quantity. The parameter determination function 276 executes a process of determining parameters necessary for the abnormality detection process.

The analysis library 280 includes a library for each processing included in the analysis module 270 executing a process. More specifically, the analysis library 280 includes a feature quantity generation library 282 to be used by the feature quantity generation function 272, a feature quantity selection library 284 to be used by the feature quantity selection function 274, and an abnormality detection engine 286 to be used by the parameter determination function 276.

The process to be executed by the feature quantity generation function 272 included in the analysis module 270 is substantially the same as the process that is executed according to the feature quantity generation instruction 134 (see FIG. 6) to be described in the user program 132 of the control device 100. The abnormality detection engine 286 included in the analysis library 280 is substantially the same as the process that is executed by the abnormality detection engine 150 (see FIG. 6) of the control device 100.

Thus, the abnormality detection engine 286 of the support device 200 corresponds to an abnormality detection unit that executes substantially the same detection process as the abnormality detection engine 150 of the control device 100 using the state value (the raw data 142) provided from the time-series database 140 of the control device 100.

In the abnormality detection system 1 according to the embodiment, an environment in which the same abnormality detection process can be realized in both the control device 100 and the support device 200 is provided. With such an environment, the abnormality detection process in the control device 100 can be reproduced in the support device 200, and as a result, the abnormality detection process to be executed by the control device 100 can be determined the support device 200 in advance in.

More specifically, the analysis module 270 of the support device 200 corresponds to a model generation unit, and determines the abnormality detection parameter 162 and the learning data set 160 on the basis of a detection result of the abnormality detection engine 286 included in the analysis library 280.

<E. Overview of abnormality detection process>

Next, an overview of an abnormality detection process that is adopted by the abnormality detection system 1 according to the embodiment will be described.

In the embodiment, when data that is a monitoring target is evaluated to be an outlier with respect to a statistically obtained data set, the data is detected as an abnormal value.

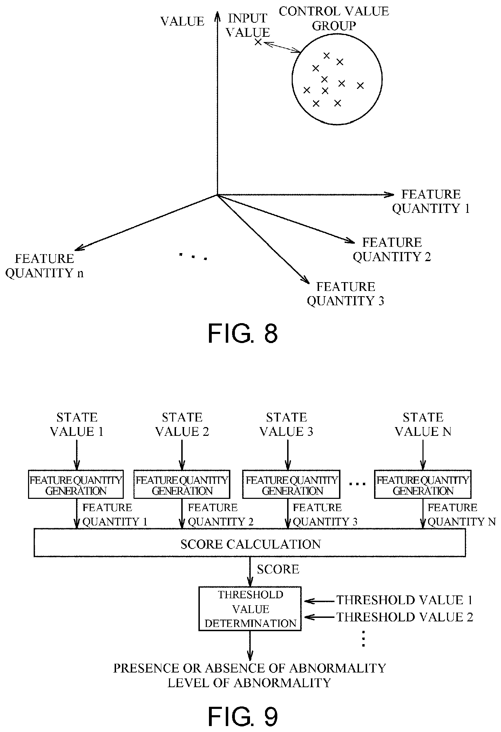

FIG. 8 is a schematic diagram illustrating a basic idea of the abnormality detection process of the abnormality detection system 1 according to the embodiment. Referring to FIG. 8, first, feature quantities 1, 2, 3, ..., n are generated from one or a plurality of state values collected from the monitoring target (it is assumed that a label "normal" is assigned to the monitoring target), and corresponding positions on the super-space with each generated feature quantity as a dimension are sequentially plotted. In the monitoring target, a coordinate value group corresponding to the state value to which the label "normal" has been assigned is defined as a normal value group in advance.

Corresponding feature quantities 1, 2, 3, ..., N are generated from one or a plurality of state values collected from the monitoring target at any sampling timing, and coordinates (corresponding to the "input value" in FIG. 8) corresponding to the generated feature quantities are set.

Finally, the presence or absence of the abnormality in the monitoring target at the sampling timing corresponding to the input value is determined on the basis of a degree of deviation of the input value from the normal value group on a super-space. The normal value group in FIG. 8 corresponds to the "model" indicating the monitoring target.

As schemes of detecting an abnormality on the basis of such a degree of deviation, a scheme of detecting an abnormality on the basis of a shortest distance from each point to a normal value group (k neighborhood scheme), a local outlier factor (LoF) scheme of evaluating a distance, including a cluster including a normal value group, and an iForest (isolation forest) scheme using a score calculated from a path length are known.

FIG. 9 is a schematic diagram schematically illustrating a processing procedure in the abnormality detection process of the abnormality detection system 1 according to the embodiment. The processing procedure illustrated in FIG. 9 is typically executed by the abnormality detection engine 150 of the control device 100.

Referring to FIG. 9, it is assumed that a set of state values is collected from the monitoring target at any sampling timing. The presence or absence of an abnormality of the monitoring target at this sampling timing is determined.

First, feature quantities 1, 2, 3, ..., n are generated using predetermined state values 1, 2, ..., n among a plurality of state values that can be collected from the monitoring target.

It should be noted that a plurality of feature quantities may be generated from the same state value. Although a configuration using at least four feature quantities is shown for convenience of description, there may be at least one feature quantity in the abnormality detection process according to the embodiment.

Subsequently, the score is calculated from one or a plurality of feature quantities. The calculated score is compared with one or a plurality of predetermined threshold values (threshold value 1, threshold value 2, ...), a determination is made as to whether or not an abnormality has occurred in the monitoring target, and/or a level of an abnormality that is occurring.

In the abnormality detection process according to the embodiment, the state values are calculated from the time series data of the state values over a predetermined period (hereinafter also referred to as a "frame"), and the score is calculated using one or a plurality of the calculated state values. Detection of an abnormality at a plurality of levels is realized by comparing the calculated score with one or more preset threshold values.

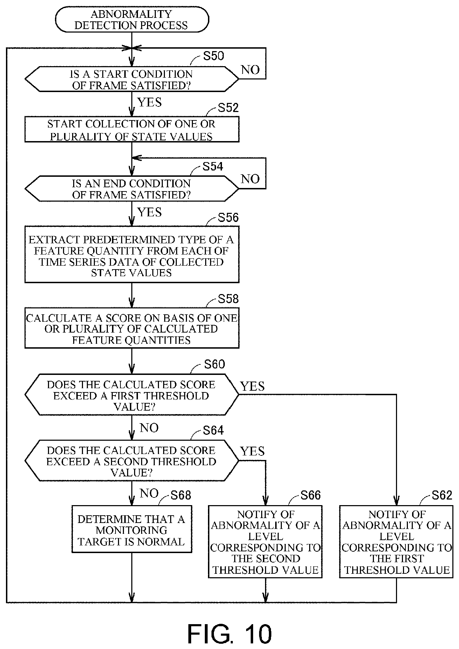

FIG. 10 is a flowchart showing a processing procedure of the abnormality detection process that is executed in the control device 100 according to the embodiment.

Each step illustrated in FIG. 10 is typically realized by the processor 102 of the control device 100 executing a program (such as a system program and a user program).

In the abnormality detection process illustrated in FIG. 10, it is assumed that two types of threshold values (a first threshold value and a second threshold value (< first threshold value)) are set.

Referring to FIG. 10, when the start condition of a predetermined frame is satisfied (YES in step S50), the control device 100 starts collection of one or a plurality of predetermined state values (step S52). Thereafter, when a predetermined frame termination condition is satisfied (YES in step S54), the control device 100 extracts a predetermined type of feature quantity from each of the time series data of the state values collected in a period of the frame (step S56). The control device 100 calculates a score on the basis of the one or a plurality of calculated feature quantities (step S58).

More specifically, the score is calculated using the feature quantity calculated from the state value related to the monitoring target according to the abnormality detection parameter by the abnormality detection engine 150 of the control device 100.

Subsequently, the control device 100 determines whether or not the calculated score exceeds the first threshold value (step S60). When the calculated score exceeds the first threshold value (YES in step S60), the control device 100 notifies an abnormality at a level corresponding to the first threshold value (step S62). For example, an abnormality at a level corresponding to the first threshold value corresponds to, for example, a warning level at which a degree of abnormality is estimated to be higher.

When the calculated score does not exceed the first threshold value (NO in step S60), the control device 100 determines whether or not the calculated score exceeds the second threshold value (step S64). When the calculated score exceeds the second threshold value (YES in step S64), the control device 100 notifies an abnormality at a level corresponding to the second threshold value (step S66). For example, an abnormality at a level corresponding to the second threshold value corresponds to, for example, an attention level at which the degree of abnormality is estimated to be higher.

Thus, the abnormality detection engine 150 of the control device 100 has a determination function of performing a determination using the calculated score and the first determination reference (a first threshold value) and the second determination reference (a second threshold value) included in the abnormality detection parameter, outputs a first determination result (for example, a warning level) when the score matches the first determination reference, and outputs a second determination result (for example, an abnormality level) when the score matches the second determination reference.

When the calculated score does not exceed the second threshold value (NO in step S64), the control device 100 determines that the monitoring target is normal (step S68). Step S50 and subsequent processes are repeated.

As described above, in the abnormality detection process according to the embodiment, presence or absence of occurrence or nonexistence at one or a plurality of abnormality levels can be detected.

<F. Schematic procedure of model generation process>

Next, a schematic procedure of the model generating process according to the embodiment will be described. The model generation process according to the embodiment includes a process of selecting a feature quantity that is used for calculation of a score, and a process of determining a threshold value for the score calculated through the selection.

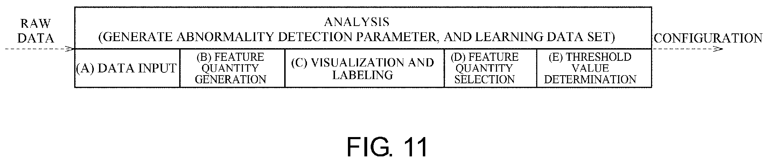

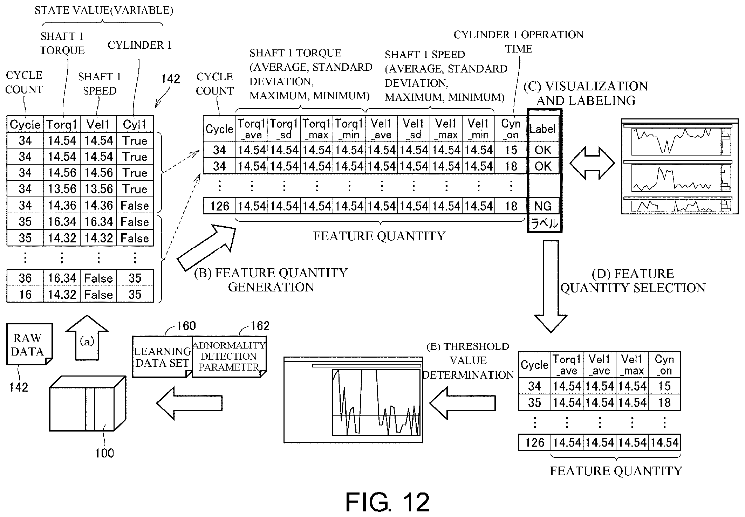

FIG. 11 is a schematic diagram illustrating content of the analysis process (ST2) included in the processing procedure illustrated in FIG. 3. FIG. 12 is a schematic diagram visually illustrating an overview of the processes (a) to (e) illustrated in FIG. 11.

Referring to FIG. 11, the analysis process (ST2) corresponding to the model generation process according to the embodiment mainly includes a total of five processes including (a) a data input process, (b) a feature quantity generation process, (c) a visualization and labeling process, (d) a feature quantity selection process, and (e) a threshold value determination process.

Referring to FIG. 12, raw data 142 which is time series data of state values collected by the control device 100 is given to the support device 200 ((a) data input process). The raw data 142 includes one or a plurality of state values at each sampling timing. In the example illustrated in FIG. 12, the raw data 142 includes a cycle count indicating the number of times of processing in the packaging machine 600, and a shaft 1 torque, a shaft 1 speed, and a cylinder 1 ON/OFF state as an example of the state value.

The support device 200 generates one or a plurality of feature quantities using the input raw data 142 ((b) feature quantity generation). In the example illustrated in FIG. 12, the feature quantity includes shaft 1 torque average, a shaft 1 torque standard deviation, shaft 1 torque maximum, and shaft 1 torque minimum as the feature quantities regarding the shaft 1 torque, and includes shaft 1 speed average, a shaft 1 speed standard deviation, shaft 1 speed maximum, and shaft 1 speed minimum as the feature quantities regarding the shaft 1 speed. Further, the generated feature quantity includes a cylinder 1 operation time.

Subsequently, in the support device 200, visualization of the feature quantity and labeling of a set of feature quantities at each sampling timing are performed ((c) visualization and labeling process). The visualization of the feature quantity may be basically executed by the support device 200, and the user may execute all or a part of the labeling.

As a more specific example, the user sets, at each sampling timing, whether a state of the monitoring target is "normal" or "abnormal" while referring to the feature quantity visualized in the form of a graph or the like. It should be noted that it is considered that an actual monitoring target is unlikely to enter an abnormal state, and the label "normal" is assigned in many cases.

Subsequently, one or a plurality of feature quantities to be used for abnormality detection are selected from among a plurality of feature quantities generated from the collected state values ((d) feature quantity selection). In the example illustrated in FIG. 12, four of an average of shaft 1 torque, an average of shaft 1 speed, a maximum of shaft 1 speed, and an operating time of cylinder 1 are selected.

The score is calculated on the basis of one or a plurality of feature quantities selected as described above and one or a plurality of threshold values for an abnormality determination are determined with reference to the calculated score ((e) threshold value determination).

Using the procedure as described above, the learning data set 160 and the abnormality detection parameter 162 are generated. The generated learning data set 160 and the generated abnormality detection parameter 162 are provided from the support device 200 to the control device 100, and the control device 100 executes an abnormality detection process according to the setting from the support device 200.

The processes (a) to (e) illustrated in FIG. 12 can be appropriately repeatedly executed, and the model indicating the monitoring target can be sequentially updated.

<G. Example of user setting operation procedure in model generation process>

Next, an example of a setting operation procedure that is performed by a user in the model generating process according to the embodiment will be described.

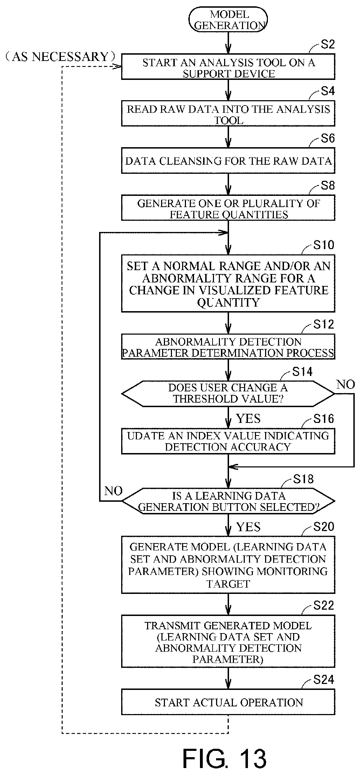

FIG. 13 is a flowchart showing a procedure example of a setting operation by the user in the model generation process according to the embodiment. Referring to FIG. 13, first, the user activates the analysis tool 230 on the support device 200 (step S2), and reads the raw data 142 into the analysis tool 230 executed on the support device 200 (step S4).

Subsequently, the user performs data cleansing on the read raw data 142 (step S6). The data cleansing is a process of deleting data unnecessary for model generation included in the raw data 142. For example, a state value of which a dispersion is zero (that is, a state value that does not fluctuate at all) is deleted from among the time-series data included in the raw data 142. A data cleansing process may be automatically executed by the analysis tool 230 or the analysis tool 230 may present a candidate for the state value that is a deletion target so that the user explicitly selects the deletion target.

Further, the user may be able to manually delete the state value determined to be unnecessary or incorrect data by referring to the visualized state value or the like. That is, the support device 200 may receive selection of the state value to be excluded from generation of the feature quantity from among the state values (the raw data 142) provided from the time-series database 140 of the control device 100.

Thereafter, the analysis tool 230 generates one or a plurality of feature quantities on the basis of the state values included in the raw data 142 after the data cleansing (step S8). More specifically, the feature quantity generation function 272 of the analysis tool 230 generates a plurality of feature quantities from the state values (the raw data 142) that are provided from the time-series database 140 of the control device 100. In step S8, as many types of feature quantities as possible may be generated (corresponding to (b) feature quantity generation in FIG. 12).

Subsequently, the analysis tool 230 visualizes a change in the feature quantity according to a selection operation of the user, and the user sets a normality range and/or an abnormality range for a change in the visualized feature quantity (step S10) (Corresponding to (c) visualization and labeling process in FIG. 12).

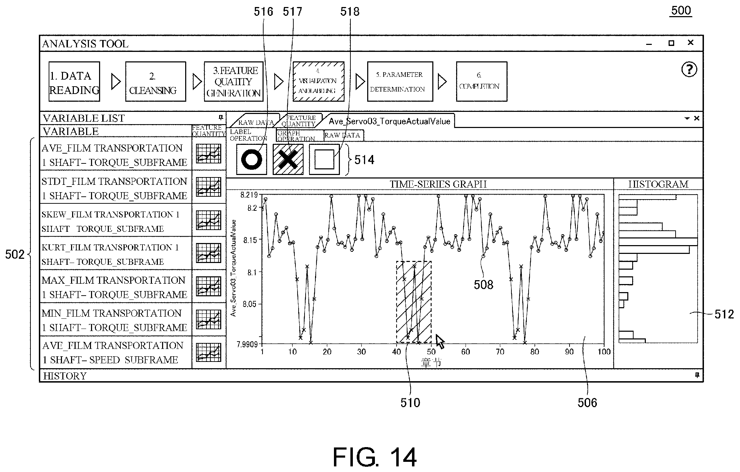

FIG. 14 is a schematic diagram illustrating an example of a user interface screen 500 that is provided to the user in step S10 of FIG. 13. Referring to FIG. 14, the user interface screen 500 visualizes a change in the feature quantity generated in step S8. Typically, in the user interface screen 500, a temporal change in the feature quantity is graphed, and the user evaluates superiority of each feature quantity by referring to this graph. Further, the user sets an abnormality range and a normality range with respect to the change in the feature quantity displayed on the user interface screen 500. It should be noted that the abnormality range and the normality range set by the user may be set on the basis of information indicating whether the monitoring target is actually abnormal or normally operate, or the user may arbitrarily set the change in the feature quantity desired to be detected to be abnormal. That is, the abnormality range and the normality range set on the user interface screen 500 are ranges that define a state of "abnormal" or "normal" that is output through the abnormality detection process according to the embodiment, and it may not necessarily match whether the monitoring target is actually abnormal or normal.

More specifically, the user interface screen 500 includes a selection reception area 502 for a feature quantity, a graph display area 506, and a histogram display area 512.

A list indicating the content of the feature quantity generated in advance is displayed in the selection reception area 502, and the user selects any feature quantity in the list displayed in the selection reception area 502.

A graph 508 showing the change in the feature quantity selected by the user in the selection reception area 502 is displayed in the graph display area 506. The graph 508 may be delimited, for example, in units of time-series data for each sampling or in units of processing of the monitoring target (for example, in units of processing works).

A histogram showing a distribution of change in the feature quantity selected by the user in the selection reception area 502 is displayed in the histogram display area 512. It is possible to know, for example, a main range of the selected feature quantity by confirming the histogram displayed in the histogram display area 512.

The user can set the normality range and/or the abnormality range of the data with respect to the change in the feature quantity (the graph 508) displayed in the graph display area 506. More specifically, the user interface screen 500 includes a labeling tool 514. The label assignment tool 514 includes a normality label setting button 516, an abnormality label setting button 517, and a label setting range designation button 518.

The user selects the normality label setting button 516 or the abnormality label setting button 517 according to whether the label to be assigned is normal or abnormal, selects the label setting range designation button 518, and then performs an operation (for example, a drag operation) for designating an area that is a target of the graph display area 506. Accordingly, the set label is assigned to the designated area.

FIG. 14 illustrates an example in which an abnormality range 510 is set. A label "abnormal" is assigned to the feature quantity at the sampling timing included in the abnormality range 510, and a label "normal" is assigned to the other feature quantities. Thus, the analysis tool 230 may have a function of assigning at least one of labels "normal" and "abnormal" to a specific range in the data series of the plurality of generated feature quantities according to a user operation.

It should be noted that the normality range and/or abnormality range of data may also be set for the histogram displayed in the histogram display area 512.

Referring back to FIG. 13, next, the analysis tool 230 executes an abnormality detection parameter determination process according to the user operation (step S12).

The process of step S12 corresponds to (d) feature quantity selection process and (e) threshold value determination process illustrated in FIG. 12.

In step S12, default parameters (such as a feature quantity and a threshold value to be used) are set using the feature quantity selection function 274 (see FIG. 7) of the analysis tool 230 in advance. In this case, an index value indicating the detection accuracy is also calculated.

When the user changes the threshold value (YES in step S14), the index value indicating the detection accuracy is updated (step S16). The user adjusts necessary parameters (such as a feature quantity and a threshold value to be used) while confirming, for example, an index value indicating the detection accuracy to be displayed.

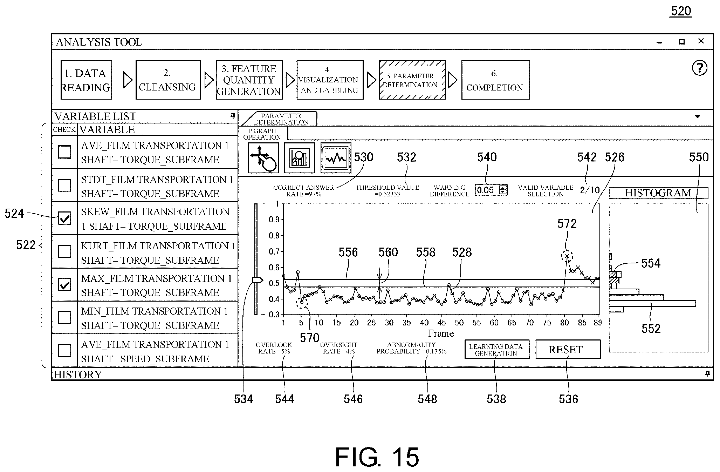

FIG. 15 is a schematic diagram illustrating an example of a user interface screen 520 that is provided to the user in steps S12 to S16 of FIG. 13. Referring to FIG. 15, the user interface screen 520 mainly receives selection of one or a plurality of feature quantities to be used for the abnormality detection process and receives selection of the threshold value to be used for the abnormality detection process. Further, the user interface screen 520 displays the index value indicating detection accuracy.

More specifically, the user interface screen 520 includes a selection reception area 522 for the feature quantity, a graph display area 526, and a histogram display area 550.

The selection reception area 522 of the user interface screen 520 corresponds to a user interface that receives selection of one or a plurality of feature quantities to be used for a determination of the abnormality detection parameter and the learning data set among the plurality of generated feature quantities. More specifically, a list showing the content of the feature quantity generated in advance is displayed in the selection reception area 522, and the user checks a check box 524 corresponding to any feature quantity on the displayed list to determine the feature quantity to be used for calculation of the score.

The feature quantity displayed in the selection reception area 522 that is estimated to be higher in a degree of importance may be listed so as to be at an upper position on the basis of a result analyzed in advance by the feature quantity selection function 274 (see FIG. 7) of the analysis tool 230. That is, a display order of the plurality of generated feature quantities may be determined according to a rank determined in a procedure to be described below in the selection reception area 522.

In addition, in the initial selection reception area 522, the feature quantity selected by the feature quantity selection function 274 (see FIG. 7) of the analysis tool 230 in advance may be selected as a default value. That is, in the selection reception area 522, a predetermined number of feature quantities among the plurality of generated feature quantities may be displayed in a selected state according to the determined rank. FIG. 15 illustrates a state in which use of two feature quantities is selected for score calculation. A variable selection number display 542 to which description of "effective variable selection" is assigned indicates the number of selected feature quantities. In the user interface screen 520 illustrated in FIG. 15, an example in which the score can be calculated using a maximum of ten feature quantities, and two feature quantities are selected among the ten feature quantities is illustrated.

A graph 528 showing a change in the score calculated on the basis of one or a plurality of feature quantities selected by checking the check box 524 in the selection reception area 522 is displayed in the graph display area 526. Thus, a data series of scores calculated on the basis of the data series of one or a plurality of selected feature quantities is displayed in the graph display area 526. Thus, the analysis module 270 of the support device 200 displays a data series of scores calculated using one or more feature quantities generated from the state value (the raw data 142) provided from the time-series database 140 of the control device 100.

Each element constituting the graph 528 is expressed using a shape corresponding to the label. In the example illustrated in FIG. 15, an element 570 to which the label "normal" has been assigned is represented by "O", and an element 572 to which the label "abnormal" has been assigned is represented by "X".

A threshold value setting slider 534 is arranged in association with the graph display area 526. The set first threshold value is updated in conjunction with the user operation with respect to the threshold value setting slider 534, and a position of the first threshold value display line 556 displayed in the graph display area 526 changes. Thus, the threshold value setting slider 534 receives a setting of the threshold value for the score displayed in the graph display area 526.

A numerical value of the first threshold value set by the threshold value setting slider 534 is shown in a numerical value display 532. The value of the numerical value display 532 is also updated in conjunction with the user operation with respect to the threshold value setting slider 534. Further, as a default value of the first threshold value, an initial value calculated by the feature quantity selection function 274 and the parameter determination function 276 (see FIG. 7) of the analysis tool 230 in advance may be set.

A second threshold value display line 558 indicating the second threshold value is also displayed in the graph display area 526, in addition to the first threshold value display line 556 indicating the first threshold value. Thus, two threshold values can be set on the user interface screen 520 illustrated in FIG. 15.

More specifically, the second threshold value is determined on the basis of the numerical value set in a threshold value difference setting box 540 given the description "difference in warning" on the user interface screen 520. That is, a value obtained by subtracting the numerical value set in the threshold value difference setting box 540 from the first threshold value is calculated as the second threshold value. A distance difference 560 between the first threshold value display line 556 and the second threshold value display line 558 in the graph display area 526 corresponds to a numerical value set in the threshold value difference setting box 540.

It should be noted that a slider may be arranged for each of the first threshold value and the second threshold value, and any method of setting the first threshold value and the second threshold value can be adopted.

Thus, the analysis module 270 of the support device 200 receives a setting of two threshold values for the data series of the score as the first determination reference and the second determination reference.

A histogram showing a distribution of elements included in the graph 528 showing the change in the score displayed in the graph display area 526 is displayed in the histogram display area 550. A histogram 552 of the score corresponding to the state value to which the label "normal" is assigned and a histogram 554 of the score corresponding to the state value to which the label "abnormal" is assigned are shown in different display aspects in the histogram display area 550. By checking the histogram displayed in the histogram display area 550, a distribution state or a distribution difference of the score to which each selected label has been assigned can be confirmed.

One or more index values indicating detection accuracy are further displayed on the user interface screen 520 illustrated in FIG. 15. As a specific example, a numerical value display 530 indicating the correct answer rate, a numerical value display 544 indicating the overlook rate, a numerical value display 546 indicating the oversight rate, and a numerical value display 548 indicating the abnormality probability are arranged on the user interface screen 520. A meaning of the index value indicated by each numerical value display will be described below.

It should be noted that the index value indicating the detection accuracy is not limited to the index value illustrated in FIG. 15, and any index value may be displayed as long as the index value is an index value from which the user can check the detection accuracy.

When a reset button 536 of the user interface screen 520 is selected, resetting to a state in which the feature quantity selected in advance using the feature quantity selection function 274 of the analysis tool 230 is selected (a default state) is performed.

When a learning data generation button 538 of the user interface screen 520 is selected, the learning data set 160 and the abnormality detection parameter 162 are generated according to content set at that time point.

Referring back to FIG. 13, when the user appropriately operates the user interface screen 500 illustrated in FIG. 14 and the user interface screen 520 illustrated in FIG. 15 and selects the learning data generation button 538 of the user interface screen 520 (YES in step S18), the analysis tool 230 generates the model (the learning data set 160 and the abnormality detection parameters 162) indicating the monitoring target (step S20). That is, the analysis tool 230 generates a model for the monitoring target on the basis of the parameters adjusted by the user.

The model (the learning data set 160 and the abnormality detection parameter 162) generated in step S20 is transmitted from the support device 200 to the control device 100 (step S22), and an actual operation is started (step S24).

It should be noted that when a detection rate or the like in actual operation is regularly confirmed and the detection rate is bad after the actual operation starts (a frequency at which an abnormality is detected even though the monitoring target is in a normal state is relatively high, and/or a frequency at which the monitoring target is not in a normal state even though a normality is detected is relatively higher), the model generation may be performed again using the state values collected by the control device 100.

<H. Function and process of analysis tool 230>

Next, functions and processes that are provided by the analysis tool 230 included in the support device 200 according to the embodiment will be described. The functions and processes to be described below are executed before the user interface screen illustrated in FIGS. 14 and 15 is displayed. That is, the user interface screen illustrated in FIGS. 14 and 15 is provided using a processing result of the analysis tool 230.

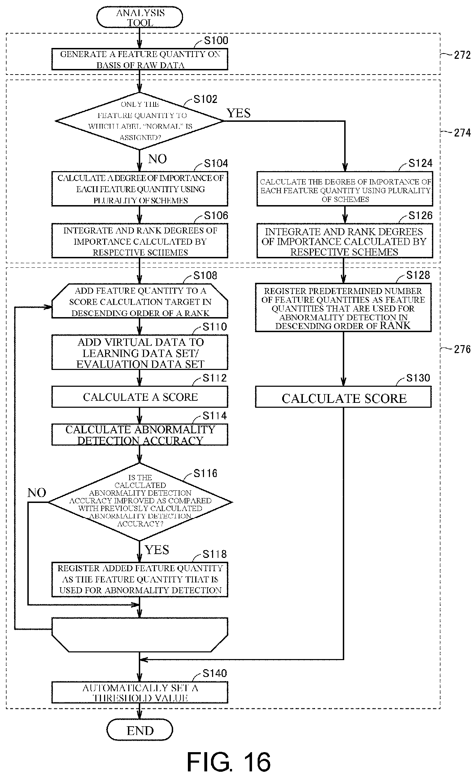

FIG. 16 is a flowchart showing a processing procedure that is executed by the analysis tool 230 of the support device 200 according to the embodiment. A process included in the flowchart of FIG. 16 is executed by the feature quantity generation function 272, the feature quantity selection function 274, and the parameter determination function 276 of the analysis tool 230 (see FIG. 7). FIG. 16 illustrates steps in the respective functions.

Referring to FIG. 16, the support device 200 generates a feature quantity on the basis of the input raw data 142 (step S100). The generation of this feature quantity is realized using the feature quantity generation function 272 of the analysis tool 230. Usually, a plurality of types of feature quantities are generated.

Subsequently, the support device 200 executes processes of steps S102 to S106, S124, and S126. These processes are realized using the feature quantity selection function 274 of the analysis tool 230. The processes of steps S102 to S106, S124, and S126 in FIG. 16 correspond to a function of estimating a degree of variable importance in the feature quantity selection function 274.

Specifically, the support device 200 determines whether or not the generated feature quantity is only one to which the label "normal" is assigned (step S102).

When the generated feature quantity is only a feature quantity to which the label "normal" is assigned (YES in step S102), the processes of steps S124 and S126 are executed. On the other hand, when the generated feature quantity includes a feature quantity to which the label "normal" is assigned and a feature quantity to which the label "abnormal" is assigned (NO in step S102), processes of steps S102 to S106 are executed.

In step S102, the support device 200 calculates a degree of importance of each feature quantity generated in step S100 using a plurality of schemes (step S104). The support device 200 integrates and ranks the degrees of importance calculated by the respective schemes for each feature quantity (step S106).

In step S124, the support device 200 calculates the degree of importance of each feature quantity generated in step S100 using a plurality of schemes (step S124). The support device 200 integrates and ranks the degrees of importance calculated by the respective schemes with respect to each feature quantity (step S126).

In both of steps S106 and S126, the degree of importance of the feature quantity is calculated, but in step S126 in which there is no feature quantity to which the label "abnormal" are not assigned, there is a limit on the degree of importance that can be calculated. Therefore, in steps S106 and S126, in a situation, the degree of importance may be calculated only using one method for each of the generated feature quantities.

Through the process as described above, the plurality of feature quantities generated in step S100 are ranked in descending order of importance.

The processes of steps S102 to S106, S124 and S126 described above are handled by the feature quantity selection function 274 of the analysis tool 230. More specifically, in steps S104 and S124, the feature quantity selection function 274 of the analysis tool 230 calculates a degree of importance indicating a degree that is effective for abnormality detection, for each of the plurality of generated feature quantities, according to a plurality of schemes. In step S106, the feature quantity selection function 274 of the analysis tool 230 integrates a plurality of degrees of importance calculated according to a plurality of schemes with respect to each of the plurality of generated feature quantities, and determines the rank of degree of importance among the plurality of generated feature quantities. Details of these will be described below.

Subsequently, the support device 200 executes the process of steps S108 to S118 or steps S128 and S130. These processes are realized by using the parameter determination function 276 of the analysis tool 230. The processes of steps S108 to S118 (excluding step S110) or steps S128 and S130 in FIG. 16 correspond to the abnormality detection application (score calculation) function of the feature quantity selection function 274, and the process in step S110 in FIG. 16 corresponds to the virtual data generation function of the feature quantity selection function 274.

First, after execution of step S106, the support device 200 adds the feature quantity to the score calculation target in a descending order of rank (step S108). That is, features with a high degree of importance may be preferentially selected.

Here, the support device 200 adds the virtual data to the learning data set (step S110). Details of the process of adding virtual data to the learning data set in step S110 will be described below.

Subsequently, using the learning data set to which the virtual data has been added, the support device 200 calculates the score on the basis of one or a plurality of feature quantities including the feature quantity added in step S108 (step S112). The support device 200 calculates an abnormality detection accuracy on the basis of the calculated score (step S114). The support device 200 determines whether the abnormality detection accuracy calculated in step S114 is improved as compared with previously calculated abnormality detection accuracy (step S116). When the abnormality detection accuracy calculated in step S114 is improved as compared with previously calculated abnormality detection accuracy (YES in step S116), the feature quantity added in the current process is registered as a feature quantity that is used for abnormality detection (step S118). On the other hand, when the abnormality detection accuracy calculated in step S114 is not improved as compared with previously calculated abnormality detection accuracy (NO in step S116), the feature quantity added in the current process is not registered as the feature quantity that is used for abnormality detection.

The process of steps S110 to S118 is repeated until the number of feature quantities registered as feature quantities that are used for abnormality detection reaches a predetermined number.

On the other hand, after execution of step S128, the support device 200 registers a predetermined number of feature quantities as feature quantities that are used for abnormality detection in descending order of rank (step S128). The support device 200 calculates a score on the basis of the predetermined number of feature quantities registered in step S128 (step S130).

Finally, the support device 200 automatically sets a threshold value on the basis of the calculated score in any case (step S140). The process ends.

In steps S108 and S128 described above, the parameter determination function 276 of the analysis tool 230 selects a combination of one or a plurality of feature quantities among the plurality of generated feature quantities.

In step S110, the feature quantity selection function 274 (a virtual data generation function) of the analysis tool 230 generates an additional learning data set including at least a part of the data series of the feature quantities of the selected combination and data series of statistically generated virtual feature quantity. In addition to generation of the additional learning data set, the feature quantity selection function 274 (a virtual data generation function) of the analysis tool 230 may add the data series of the statistically generated virtual feature quantity to the evaluation data set to generate additional evaluation data set.

Here, the "evaluation data set" means a data series that is used for evaluation of abnormality detection capability, detection accuracy, identification capability, or the like of the model generated using the learning data set. Therefore, it is preferable for the "evaluation data set" to be a data series to which a label has been assigned in advance.

In steps S112 and S114, the parameter determination function 276 of the analysis tool 230 evaluates the detection accuracy of the model corresponding to the feature quantity of the selected combination using the additional learning data set generated in step S110. In steps S116 and S118, the parameter determination function 276 of the analysis tool 230 registers any feature quantity as the model when the detection accuracy is improved by additionally selecting any feature quantity.

<I. Calculation and ranking of degree of importance of feature quantity>

Next, details of the processes (steps S104, S106, steps S124, and S126) in the feature quantity selection function 274 of the analysis tool 230 illustrated in FIG. 16 will be described.

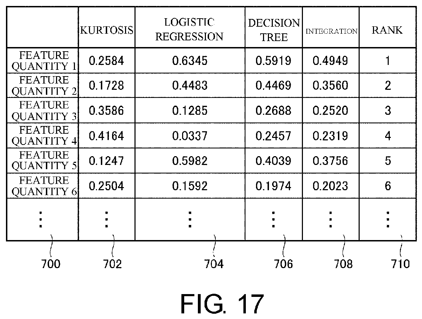

FIG. 17 is a schematic diagram illustrating a process of evaluating the degree of importance of the feature quantity that is executed by the analysis tool 230 of the support device 200 according to the embodiment. Referring to FIG. 17, the feature quantity selection function 274 of the analysis tool 230 calculates the degree of importance of each feature quantity using a plurality of schemes. In FIG. 17, an example in which evaluation is performed using three schemes including kurtosis, logistic regression, and decision tree is illustrated.

The kurtosis stored in the evaluation value column 702 is a value obtained by evaluating sharpness of a frequency distribution for the data series of the feature quantity 700 that is a target. As the kurtosis is greater, a peak of the frequency distribution is sharper and a hem of the distribution is wider. As a statistic quantity to be used for abnormality detection, as the kurtosis is greater, the kurtosis is more useful, that is, the kurtosis can be regarded as important.

Further, the standard deviation of the frequency distribution for the data series of the feature quantity that is a target may be used as the evaluation value. In this case, it can be determined that as the standard deviation is greater, the feature quantity changes and abnormality detection capability is higher (that is, is important).

In the logistic regression stored in the evaluation value column 704, any logistic function is applied to data series of the feature quantity that is a target, and a parameter defining a logistic function that maximizes a likelihood is searched for. The likelihood corresponding to the parameter that has been last searched for is regarded as a degree of importance. That is, the feature quantity that can be estimated to be with higher accuracy can be regarded as being at higher priority according to any logistic function.

Typically, the logistic regression can search for parameters and calculate likelihood for each feature quantity.

In the decision tree stored in the evaluation value column 706, a classification tree is applied to the data series of the feature quantity that is a target, and classification capability is used as the degree of importance. For an algorithm of the decision tree, CART, C4.5, ID3, or the like is known, and any algorithm may be used.

Thus, as a typical example, the degree of importance includes at least a degree of importance that is calculated according to the kurtosis of the data series of the feature quantity, the likelihood obtained by executing the logistic regression on the data series of the feature quantity, and the algorithm of the decision tree.

As described above, the value indicating the degree of importance for each feature quantity is calculated using a plurality of schemes, and a result obtained by integrating respective results is stored in an evaluation value column 708. Ranking is performed on each feature quantity on the basis of each evaluation value stored in the evaluation value column 708 (rank column 710).

In steps S106 and S126 of FIG. 16, the ranking of the feature quantity is performed on the basis of the respective evaluation values stored in the evaluation value column 708 of FIG. 17.

In step S102 of FIG. 16, since the state values to which the labels "normal" and "abnormal" are assigned are obtained, each of schemes of kurtosis, logistic regression and decision tree illustrated in FIG. 17 can be applied. On the other hand, in step S122 of FIG. 16, since there is only the state value to which the label "normal" is assigned, it is difficult to apply the logistic regression and the decision tree illustrated in FIG. 17, and the kurtosis and the standard deviation schemes are applied.

Processes of step S108 and subsequent steps and/or the processes of step S128 and subsequent steps illustrated in FIG. 16 are executed on the basis of the rank for each feature quantity determined in the processing procedure as described above.

As described above, in the abnormality detection system 1 according to the embodiment, a degree of importance of each feature quantity is calculated using a plurality of schemes, the respective feature quantities in a plurality of schemes are integrated, and then, each feature quantity is ranked from the viewpoint of the degree of importance.

<J. Addition of virtual data to learning data set>

Next, details of a process (step S110) of the parameter determination function 276 of the analysis tool 230 illustrated in FIG. 16 will be described.

When a distribution of the data included in the learning data set is distorted (or biased), it is difficult to improve accuracy of abnormality detection. In such a case, the accuracy of abnormality detection is improved by adding the virtual data to the learning data set.

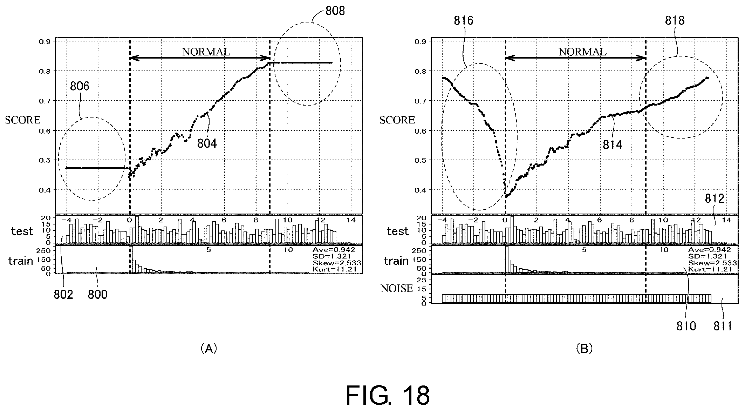

FIG. 18 is a schematic diagram illustrating a process of adding virtual data to the learning data set in the analysis tool 230 of the support device 200 according to the embodiment. FIG. 18(A) illustrates an example of an original learning data set, and FIG. 18(B) illustrates an example of a learning data set to which virtual data is added.

FIG. 18(A) illustrates a score 804 that is calculated when the evaluation data set 802 is applied to the model generated using the original learning data 800.

The evaluation data set 802 may be created by adopting a part of the data set of the labeled feature quantity as the learning data 800 and adopting the rest as the evaluation data set 802. That is, a part of the data series of the feature quantities of the combination selected at the time of model generation may be used as the learning data set, and the rest of the data series may be used as the evaluation data set 802.

As shown by the change in the score 804 illustrated in FIG. 18(A), when the distribution of the data of the learning data 800 is distorted, it is difficult to improve accuracy of abnormality detection. Further, as illustrated in FIG. 18(A), in the abnormality areas 806 and 808, the value of the score 804 is not changed and the resolution cannot be obtained.

A score 814 calculated when the evaluation data set 812 is applied to the model generated by using learning data set obtained by adding the noise 811 as virtual data to original learning data 810 is shown in FIG. 18(B).

According to the score 814 illustrated in FIG. 18(B), it can be seen that the score is higher as a deviation from a normal point (that is, the learning data) increases, and sufficient detection of an abnormality can be performed even when a distribution of the data included in the learning data set is distorted (or is biased). Further, it can be seen that the value of the score 814 greatly changes in abnormality areas 816 and 818 and the resolution is increased, as compared with FIG. 18(A).

Thus, the score 804 corresponds to the probability of erroneous detection when the evaluation data set 812 is applied to a model including additional learning data sets obtained by adding the virtual data to the learning data set.

It should be noted that virtual data can be similarly added to the evaluation data set 812. In this case, the score 804 (probability of erroneous detection) is calculated using the additional evaluation data set obtained by adding the virtual data to the evaluation data set 812.

Next, an example of a method of generating virtual data to be added to the learning data 810 will be described. It is preferable for, for example, noise generated from a uniform distribution in a certain range to be used as the virtual data. A procedure for generating such virtual data is as follows.

(1) A distribution range of the virtual data to be added is determined (for example, can be set to a range from a lower limit value obtained by subtracting any offset from the minimum value to an upper limit value obtained by adding any offset to the maximum value with respect to a range from a minimum value to a maximum value of the data set of the generated feature quantity).

(2) The number of data points N of the virtual data to be added is determined (for example, N = the number of data points included in the learning data set $\times$ 5%)

(3) The number of data points M per one dimension (one feature quantity) of the virtual data to be added is determined (that is, the number of data points N to be added = the number of data points M ^ the number of dimensions).

(4) A step size L of virtual data to be added is calculated (corresponds to a width obtained by dividing the distribution range of virtual data determined in (1) by the number of data points M.

(5) Finally, virtual data per one dimension (one feature quantity) is generated (data is generated for each step width L in the distribution range of the virtual data determined in (1).

(6) Virtual data including elements of all M dimensions is generated through a permutation combination of virtual data of each dimension (N per dimension).

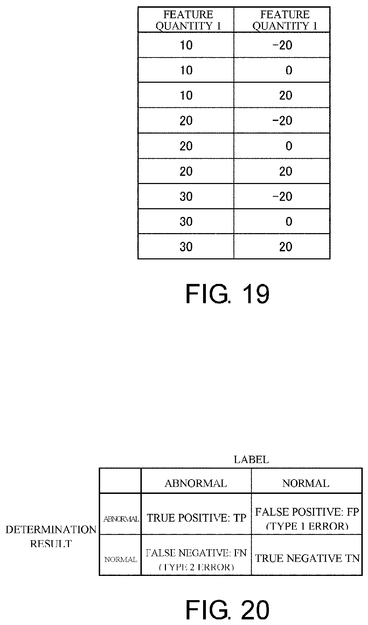

FIG. 19 is a schematic diagram illustrating an example of virtual data that is generated by the analysis tool 230 of the support device 200 according to the embodiment. FIG. 19 illustrates an example in which two-dimensional virtual data is generated. Each dimension (feature quantity 1 and feature quantity 2) has three elements. That is, when the feature quantity 1 = [10, 20, 30] and the feature quantity 2 = [- 20, 0, 20], the virtual data generated through the combination is as illustrated in FIG. 19.

The virtual data generated in this way is added to the data set of the feature quantity generated from the raw data such that the virtual data can be added to both or some of the learning data set and the evaluation data set. It should be noted that a distribution range of virtual data to be added and the number of virtual data to be added may be changed appropriately.

Using the processing procedure as described above, the virtual data is generated.

<K. Calculation and Ranking of degree of importance of feature quantity>

Next, details of a process (steps S112, S114, and S130) of the parameter determination function 276 of the analysis tool 230 illustrated in FIG. 16 will be described.

In the abnormality detection system 1 according to the embodiment, for example, abnormality detection using an iForest method is performed. In the iForest method, in a model generation stage, a learning data set is divided by randomly set partitions, and a tree structure in which each partition is a node is formed. The abnormality detection determines whether or not input data is abnormal on the basis of a depth (a path length or the number of partitions on a path) to a root node of the model created in advance.

When the iForest method is used, the scores calculated in steps S112 and S130 can be calculated on the basis of a path length when the learning data set is divided into partitions. Further, a method of calculating the abnormality detection accuracy in step S114 can be realized by calculating Under Area the Curve (AUC) on the basis of a Receiver Operating Characteristic (ROC) curve defined by the false positive axis and the true positive axis.

The AUC means an area on the lower side of the ROC curve and is an index indicating good performance of a discrimination algorithm. The AUC has a value from 0 to 1, and an area when complete classification is possible is 1.

FIG. 20 is a schematic diagram illustrating an example of index values for calculating the detection accuracy that is calculated in the abnormality detection process according to the embodiment. Referring to FIG. 20, true positive (TP) means the number of samples determined to be "abnormal" with respect to the state value to which the label "abnormal" is assigned. False positive (FP) means the number of samples determined to be "abnormal" (type 1 error) with respect to the state value to which the label "normal" is assigned. True negative (TN) means the number of samples determined to be "normal" with respect to the state value to which the label "normal" is assigned. False negatives (FN) means the number of samples determined to be "normal" (type 2 errors) with respect to the state value to which the label "abnormal" is assigned.

The ROC curve is obtained by plotting a result of sequentially changing the threshold values in a coordinate system in which a horizontal axis is a false positive rate (FPR; false positive axis) that is a rate of false positive (FP), and a vertical axis is a true positive rate (TPR; true positive axis) that is a rate of true positive (TP). Here, $FPR = FP / (FP + TN)$ and $TPR = TP / (TP + FN)$.

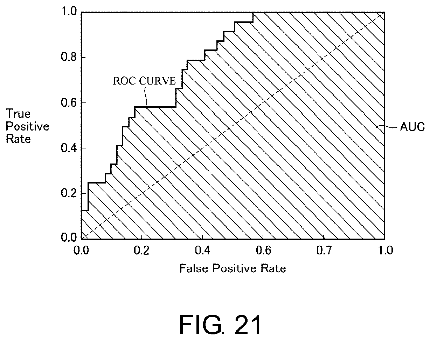

FIG. 21 is a schematic diagram illustrating an AUC calculation process in the abnormality detection process according to the embodiment. In a ROC curve illustrated in FIG. 21, each portion which changes stepwise corresponds to each set threshold value. An area of a region below the ROC curve corresponds to the AUC. Detection accuracy can be calculated more accurately by changing the threshold value more finely.

In the process of calculating the abnormality detection accuracy shown in step S114 in FIG. 16 described above, for example, a set of scores for each cycle calculated in step S112 can be adopted as a threshold value list for calculation of an AUC. The true positivity (TP), the false positivity (FP), the true negative (TN), and the false negative (FN) are calculated for each threshold value included in the threshold value list, and corresponding TPR and FPR are calculated. A ROC curve is determined by plotting a set of TPR and FPR calculated for each threshold value, and an AUC (an area under the ROC curve) is calculated from the determined ROC curve.

Thus, the analysis module 270 of the support device 200 calculates an index value indicating the detection accuracy on the basis of the label assigned to each element included in the data series of the score and the determination result when the determination reference designated by the user has been applied to the data series of the score.

More specifically, a probability of erroneous detection (determining that data to which the label "normal" has been assigned is "abnormal" or determining that data to which the label "abnormal" has been assigned is "normal") is evaluated using data to which the label "normal" has been assigned and data to which the label "abnormal" has been assigned included in the learning data set.

<L. Automatic threshold value setting and calculation of index value indicating detection accuracy>

Next, details of a process (step S140) of the parameter determination function 276 of the analysis tool 230 illustrated in FIG. 16 will be described.

An example of the index value indicating the detection accuracy will first be described. True positive (TP), false positive (FP), true negative (TN), and false negative (FN) are used for calculation of the overlook rate (FNR), the oversight rate (FPR), and the correct answer rate (accuracy) shown in the user interface screen 520 illustrated in FIG. 15.

The overlook rate (corresponding to the numerical value display 544 indicating the overlook rate in FIG. 15) indicates a probability of a sample incorrectly determined to be normal among the number of samples to which the label of abnormal has been assigned. That is, the overlook rate means a probability of determining that the element to which the label of abnormal has been assigned is normal. Specifically, the overlook rate is expressed by the following equation.

$$\text{Overlook rate (FNR)} = \text{FN} / (\text{TP} + \text{FN}) = 1\text{-sensitivity}$$

The oversight rate (corresponding to the numerical value display 546 indicating the oversight rate in FIG. 15) indicates a probability of a sample incorrectly determined to be abnormal among the number of samples to which the label of normal has been assigned. That is, the oversight rate means a probability of determining that the element to which the label of normal has been assigned is abnormal. Specifically, the oversight rate is expressed by the following equation.

$$\text{Oversight rate (FPR)} = (\text{FP} + \text{TN}) = 1 - \text{specificity}$$

The correct answer rate indicates a probability of determining that a sample to which the label of normal has been assigned is normal and determining that a sample to which the label of abnormal has been assigned is abnormal among all samples. That is, the correct answer rate means a probability of a determination according to the label assigned to the element being performed. Specifically, the correct answer rate is expressed by the following equation.
$$\text{Correct answer rate} = (\text{TP} + \text{TN}) / \text{total number of samples}$$

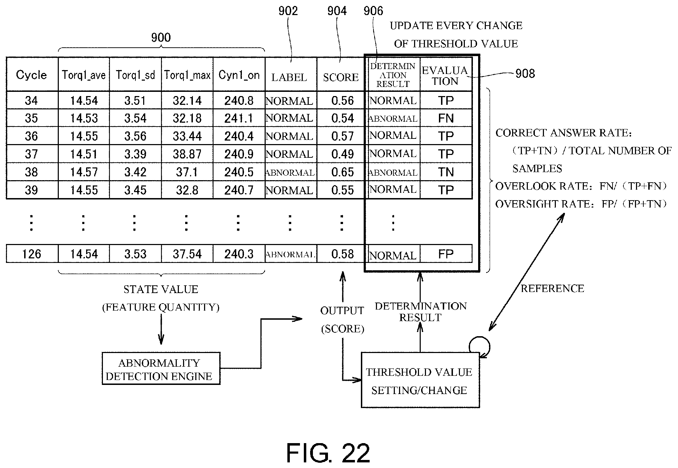

The abnormality probability (corresponding to the numerical value display 548 showing the abnormality probability in FIG. 15) indicates a rate of an area determined to be "abnormal" (= an area exceeding the threshold value) occupied in a sample distribution.
It should be noted that it is not necessary for all of the overlook rate, oversight rate, correct answer rate, and abnormality probability described above to be adopted as the index value indicating the detection accuracy, and at least one of these may be included.
Next, the automatic threshold value setting process will be described. FIG. 22 is a schematic diagram illustrating a process regarding the automatic threshold value setting in the abnormality detection process according to the embodiment. Referring to FIG. 22, a score 904 is calculated for one or more feature quantities 900 for each cycle and for corresponding label 902. The feature quantity 900 to be used for calculation of the score 904 is determined through a previous process. The score 904 is calculated by providing the feature quantity 900 of each cycle to the abnormality detection engine 286 (FIG. 7).
For the score 904 calculated for each cycle, the evaluation is repeatedly executed using a plurality of threshold values. FIG. 22 illustrates an example of a determination result 906 and an evaluation 908 which are output when a certain threshold value is set.
The determination result 906 is a result of determining whether the score 904 calculated for each cycle is "normal" or "abnormal" on the basis of whether or not the score 904 exceeds a set threshold value.
Further, the determination result 906 output for each cycle is compared with the corresponding label 902, and the evaluation 908 is determined. The evaluation 908 indicates any one of the true positivity (TP), the false positivity (FP), the true negative (TN), and the false negative (FN), which is determined on the basis of the label 902 and the determination result 906.
The correct answer rate, the overlook rate, and the oversight rate can be calculated on the basis of the content of the evaluation 908 output for a certain threshold value. Since the determination result 906 and the evaluation 908 are updated each time the threshold value is changed, the threshold value at which the index value (the correct answer rate, the overlook rate, and the oversight rate) indicating the detection accuracy enters a preferable state is recursively determined.
The state in which the index value indicating the detection accuracy is preferable is typically a state in which the correct answer rate indicates a maximum value and both of the overlook rate and the oversight rate indicate a minimum value.
It should be noted that the abnormality probability is calculated by performing Box-Cox conversion (that is, conversion of a data distribution to be closer to a normal distribution) on the score 904 calculated for each cycle, and using any statistical index (for example, $3\sigma$ or $5\sigma$) designated by the user as a threshold value.
Through the above process, an initial threshold value is automatically set. Further, when the user changes the initial threshold value, the index value indicating the detection accuracy is calculated again and presented to the user. The user sets an optimal threshold value while confirming the index value indicating the detection accuracy which changes according to the threshold value. As described above, in the abnormality detection system 1 according to the embodiment, a plurality of threshold values (for example, a first threshold value and a second threshold value) can be set. When the user sets a plurality of threshold values, each set threshold value is output as some of the abnormality detection parameters.

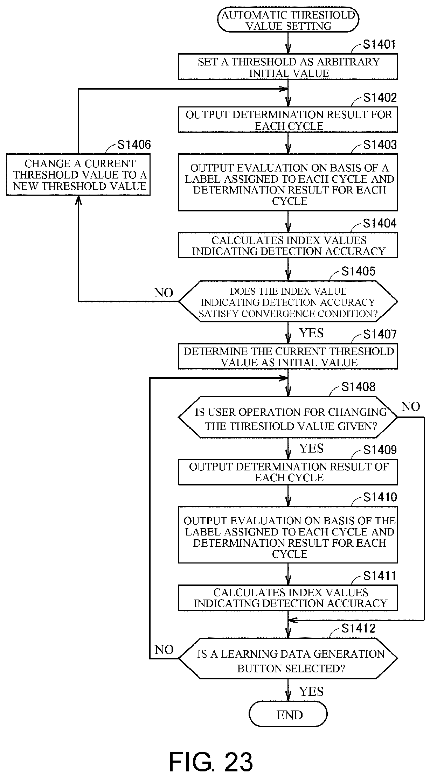

FIG. 23 is a flowchart showing a more detailed processing procedure regarding the automatic threshold value setting shown in step S140 of the flowchart illustrated in FIG. 16. Referring to FIG. 23, the support device 200 sets the threshold value to any initial value (step S1401), and executes the abnormality detection process using a currently set threshold value for the score for each cycle calculated in S112 or S130 in FIG. 16 to output a determination result for each cycle (step S1402). Subsequently, the support device 200 outputs evaluation (any one of the true positivity (TP), the false positivity (FP), the true negative (TN), and the false negative (FN)) on the basis of the label assigned to each cycle and the determination result for each cycle output in step S1402 (step S1403). The support device 200 calculates index values (correct answer rate, overlook rate, and oversight rate) indicating the detection accuracy (step S1404).

Subsequently, the support device 200 determines whether or not an index value (the correct answer rate, the overlook rate, and the oversight rate) indicating the detection accuracy calculated in step S1404 satisfies a convergence condition (step S1405). The convergence condition is a condition for determining that the index value indicating the detection accuracy is in a preferable state.

When the convergence condition is not satisfied (NO in step S1405), the support device 200 changes the current threshold value to a new threshold value (step S1406), and repeats the processes of step S1402 and subsequent steps.

When the convergence condition is satisfied (YES in step S1405), the support device 200 determines the current threshold value as an initial value (step S1407). The initial value of the determined threshold value is reflected in the user interface screen 520 illustrated in FIG. 15.

Thereafter, the support device 200 determines whether or not a user operation for changing the threshold value is given (step S1408). When the user operation for changing the threshold value is given (YES in step S1408), the support device 200 executes an abnormality detection process for the score for each cycle calculated in step S112 or S130 in FIG. 16 using the changed threshold value and outputs a determination result of each cycle (step S1409).

Subsequently, the support device 200 outputs evaluation (any one of the true positivity (TP), the false positivity (FP), the true negative (TN), and the false negative (FN)) on the basis of the label assigned to each cycle and the determination result for each cycle output in step S1409 (step S1410). The support device 200 calculates index values (correct answer rate, overlook rate, and oversight rate) indicating the detection accuracy (step S1411). The index value indicating the calculated detection accuracy is reflected in the user interface screen 520 illustrated in FIG. 15.

Thus, when the set threshold value is changed, the support device 200 also updates the index value indicating the detection accuracy.

Subsequently, the support device 200 repeats the processes of step S1408 and subsequent steps until the learning data generation button 538 of the user interface screen 520 illustrated in FIG. 15 is selected (YES in step S1412).

Through the processing procedure as described above, the threshold value is automatically set, and the index value (the correct answer rate, the overlook rate, and the oversight rate) indicating the detection accuracy is appropriately calculated.

<M. Example of display of index value indicating detection accuracy>

Next, an example of a display of the index value indicating the detection accuracy as described above will be described.

Referring back to FIG. 15, the numerical value display 530 indicating the correct answer rate, the numerical value display 544 indicating the overlook rate, the numerical value display 546 indicating the oversight rate, and the numerical value display 548 indicating the abnormality probability are arranged as an example of the index value indicating the detection accuracy. In addition, elements in which overlook and oversight occur may be visualized.

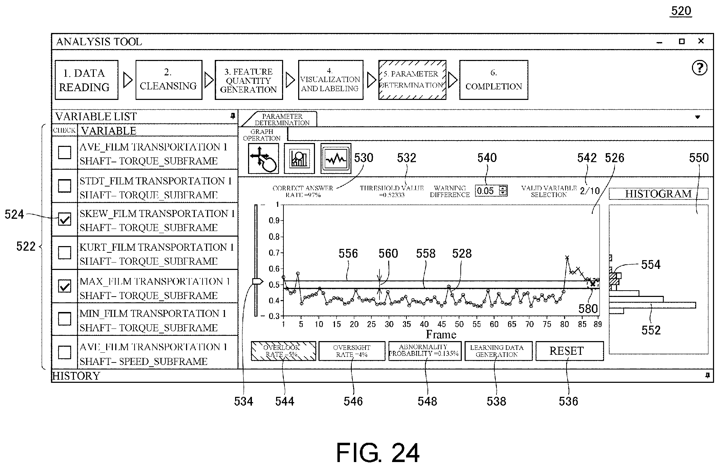

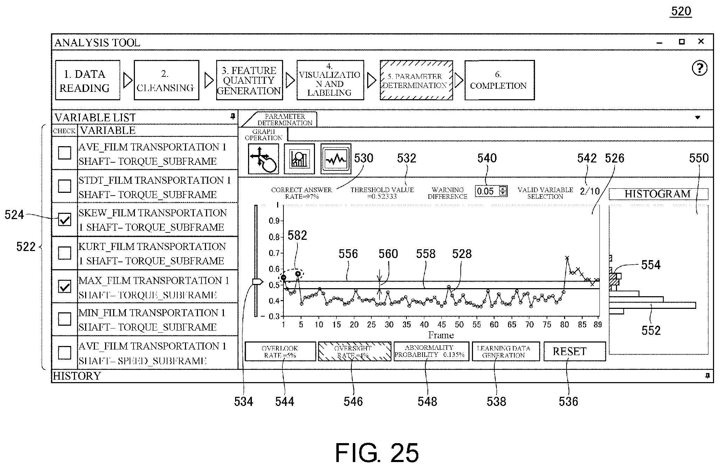

FIGS. 24 and 25 are schematic diagrams illustrating an example of displays of the index value indicating the detection accuracy. In the user interface screen 520 illustrated in FIGS. 24 and 25, the numerical value display 544 indicating the overlook rate, the numerical value display 546 indicating the oversight rate, and the numerical value display 548 indicating the abnormality probability can be selected by the user. When the user selects one of the numerical value displays, the element corresponding to the selected index is highlighted.

On the user interface screen 520 illustrated in FIG. 24, the numerical value display 544 indicating the overlook rate is selected, and the element 580 in which overlook is occurring is highlighted in an aspect different from other elements. The element 580 in which the overlook is occurring is an element to which a normality label has been assigned, but is determined to be abnormal. That is, the element located under the first threshold value display line 556 among the elements to which the normality label has been assigned is highlighted.

In the user interface screen 520 illustrated in FIG. 25, the numerical value display 546 indicating the oversight rate is selected, and the element 582 in which oversight has occurred is highlighted in an aspect different from other elements. The element 582 in which oversight has occurred is an element to which label abnormal is assigned, but be an element determined to be normal. That is, an element located above the first threshold value display line 556 among the elements to which the label abnormal has been assigned is highlighted.

It should be noted that when the numerical value display 548 indicating the abnormality probability is selected, an element exceeding a statistical index (such as $3\sigma$ of a score distribution) calculated as the abnormality probability may be highlighted.

The user interface screen 520 as illustrated in FIGS. 24 and 25 can be provided, and the user can easily predict whether the set threshold value causes a reasonable evaluation result (determination result).

<N. Modification example>

Although the control device 100 and the support device 200 are independent configurations in the abnormality detection system 1 illustrated in FIG. 2, all or some of the functions of the support device 200 may be incorporated in the control device 100. For example, repetitive execution of raw data transmission and model generation process can be realized more easily by installing the analysis tool 230 mounted on the support device 200 in the control device 100.

The module configuration illustrated in FIGS. 6 and 7 is an example, and any implementation may be adopted as long as the above-described function can be provided. For example, the functional modules illustrated in FIGS. 6 and 7 may be implemented as a set of a plurality of functional modules due to, for example, restrictions on hardware or programming restrictions, or the plurality of function modules illustrated in FIGS. 6 and 7 may be implemented as a single module.

<P. Benefits>

In the abnormality detection system according to the embodiment, one or a plurality of determination references (typically, a threshold value) can be arbitrarily set for the score that is calculated from one or a plurality of feature quantities generated from the state value related to the monitoring target. A different notification operation according to each set determination references, or the like is also possible.

By enriching types of expressions of such abnormality detection, a maintenance worker or the like can more easily obtain knowledge for determining what kind of determination references should be set. In addition, the maintenance worker or the like can perform maintenance work of a facility or the like that is a monitoring target according to a priority according to respective determination references. Further, it is also easy to apply to a large number of notification devices such as signal lamps which are disposed at a manufacturing site or the like.

Further, in the abnormality detection system according to the embodiment, one or a plurality of index values indicating the detection accuracy are provided. A user such as a maintenance worker can optimize the determination reference to be set for each monitoring target by referring to the index value indicating the detection accuracy. By referring to the index value indicating such detection accuracy, it is possible to reduce work that is out of the predictive maintenance, such as changing the determination reference after some abnormality actually occurs in the machine or the device. In addition, it is not necessary to perform trial and error verification or the like for setting determination references, and efficiency of maintenance work can be improved.

[Reference Signs List]

1 Abnormality detection system
2 Field network
6 Upper network
10 Control computing unit
16, 124 I/O unit
18 Notification device
20 Abnormality detection unit
22 Calculation unit
24 Determination unit
100 Control device
102, 202 Processor
104 Chip set
106, 206 Main storage device
108, 208 Secondary storage device
110, 214 Upper network controller
112, 212 USB controller
114 Memory card interface
116 Memory card
118, 120 Field bus Controller

122 Internal bus controller
130 PLC engine
132 User program
134 Feature quantity generation command
136 Write command
138 Variable
140 Time series database
122 Raw data
150, 286 Abnormality detection engine
160 Learning data set
162 Abnormality detection parameter
200 Support device
204 Optical drive
205 Recording medium
216 Input unit
218 Display unit
220 Bus
222 Development program
224 PLC Interface program
226 Analysis program
228 OS
230 Analysis tool
232 PLC interface
234 Visualization module
236 Event management module
240 User interface
242 Script engine
244 Setting file
250 File management module
252 Data input function
254 Data generation function
260 Screen generation module
262 Polygonal line generation function
264 Parameter adjustment function
266 Graph library
270 Analysis module
272 Feature quantity generation function
274 Feature quantity selection function
276 Parameter determination function
280 Analysis library
282 Feature quantity generation library
284 Feature quantity selection library
300 Database Server
400 Operation Display device
500, 520 User interface screen
502, 52 Selection reception area
506, 526 Graph display area
508, 528 Graph
510 Abnormality range
512, 550 Histogram display area
514 Label assignment tool
516 Normality label setting button
517 Error label setting button
518 Label setting range specification button
524 Check box
530, 532, 544, 546, 548 Numerical value display
534 Value Setting slider
536 Reset button

538 Learning data generating button
540 Threshold value difference setting box
542 Variable selection number display
552, 554 Histogram
556, 558 Value display line
560 Distance difference
570, 572, 580, 582 Element
600 Packaging machine
604 Packaging body
605 Packaged object
606 Individual packaging body
610, 620 Rotor
612, 622 Rotation shaft
614, 624 Processing mechanism
615, 616, 625, 626 Heater
617, 627 Cutter
618, 628 Servomotor
619, 629 Servo driver
700, 900 Feature quantity
702, 704, 706, 708 Evaluation value column
710 Rank column
800, 810 Learning data
802, 812 Evaluation data set
84, 814, 904 Score
806, 808, 816, 818 Abnormality area
811 Noise
902 Label
906 Determination result
908 Evaluation.

**Claims**

1. An abnormality detection system comprising:
   a control device (100) comprising:

   a control computing unit (10, 130) configured to execute control computation for controlling a control target; and
   a first abnormality detection unit (20, 150) configured to provide a state value related to a monitoring target among state values collected by the control computing unit to a model for detecting an abnormality that may occur in the monitoring target, wherein the model is defined by an abnormality detection parameter and a learning data set; wherein the first abnormality detection unit includes
   a calculation unit (22) configured to calculate a feature quantity from the state value related to the monitoring target according to the abnormality detection parameter, and to calculate a score using the feature quantity, and
   a determination unit (24) configured to perform a determination using the score calculated by the calculation unit and both a first determination reference and a second determination reference included in the abnormality detection parameter, to output a first determination result when the score matches the first determination reference, and to output a second determination result when the score matches the second determination reference, wherein the control device (100) further comprises a state value storage unit (140) configured to store at least the state value related to the monitoring target among the state values collected by the control computing unit;
   wherein the abnormality detection system further comprises a support device (200), other than the control device (100), comprising:

   a second abnormality detection unit (286) configured to execute substantially the same detection process as the first abnormality detection unit using the state value provided from the state value storage unit (140); and
   a model generation unit (270) configured to determine the abnormality detection parameter and the learning data set, and to
   set the abnormality detection parameter and the learning data set for the first abnormality detection unit on the basis of a detection result of the second abnormality detection unit, **characterised in that** the model generation unit includes

a means for displaying data series of a score calculated from one or a plurality of feature quantities that are generated from the state value provided from the state value storage unit; and

a means for receiving a setting of two threshold values for the data series of the score as the first determination reference and the second determination reference.

2. The abnormality detection system according to claim 1,

wherein the model generation unit (270) is configured to set the first determination reference to have a higher value than the second determination reference, and

wherein a degree of abnormality of the fist determination result is higher than a degree of abnormality of the second determination result.

3. The abnormality detection system according to claim 1, wherein the model generation unit includes a means for calculating an index value indicating detection accuracy on the basis of a label assigned to each element included in the data series of the score and a determination result when a determination reference designated by a user has been applied to the data series of the score.

4. The abnormality detection system according to claim 3, wherein the index value indicating the detection accuracy includes one of

an overlook rate that is a probability of incorrectly determining that an element is normal,

an oversight rate that is a probability of incorrectly determining that an element is abnormal, and

a correct answer rate that is a probability that a determination according to the label assigned to the element is performed.

5. The abnormality detection system according to claim 3 or 4, wherein the model generation unit is configured to update an index value indicating the detection accuracy when a set threshold value is changed.

6. The abnormality detection system according to any one of claims 1 to 5, further comprising a notification device (18) configure to perform a notification operation in a form according to a determination result from the determination unit.

7. A support device (200) that is configured to be connected to a control device (100) for controlling a control target, wherein the control device comprises a control computing unit (130) configured to execute control computation for controlling the control target; and a first abnormality detection unit (150) configured to provide a state value related to a monitoring target among state values collected by the control computing unit to a model for detecting an abnormality that may occur in the monitoring target, wherein the model is defined by an abnormality detection parameter and a learning data set; and a state value storage unit (140) configured to store at least the state value related to the monitoring target among the state values collected by the control computing unit,

the support device includes

a second abnormality detection unit (286) configured to execute substantially the same detection process as the first abnormality detection unit using the state value provided from the state value storage unit, and

a model generation unit (270) configured to determine the abnormality detection parameter and the learning data set, and to

set the abnormality detection parameter and

the learning data set for the first abnormality detection unit on the basis of a detection result of the second abnormality detection unit, and

the model generation unit includes a means for displaying the data series of a score calculated from one or a plurality of feature quantities that are generated from the state value provided from the state value storage unit and

a means for receiving a setting of two threshold values for the data series of the score as the first determination reference and the second determination reference.

8. An abnormality detection method comprising:

executing, by a control device (100), control computation for controlling a control target; and

providing, by the control device (100), a state value related to a monitoring target among state values collected by the control device to a model for detecting an abnormality that may occur in the monitoring target, wherein the model is defined by an abnormality detection parameter and a learning data set,

wherein the detecting of an abnormality includes

calculating, by the control device (100), a score using a feature quantity that is calculated from the state value related to the monitoring target, the feature quantity being calculated according to the abnormality detection parameter;

performing a determination using the calculated score and both a first determination reference and a second determination reference included in the abnormality detection parameter; and

outputting a first determination result when the calculated score matches the first determination reference, and outputting a second determination result when the calculated score matches the second determination reference,

the abnormality detection method **characterized in that**:

storing, in a state value storage unit (140) at least the state value related to the monitoring target among the state values collected by the control computation;

executing, by a support device (200), other than the control device (100), substantially the same detection process using the state value;

determining the abnormality detection parameter and the learning data set on the basis of a detection result;

displaying data series of a score calculated from one or a plurality of feature quantities that are generated from the state value provided from the state value storage unit; and

receiving a setting of two threshold values for the data series of the score as the first determination reference and the second determination reference.

## Patentansprüche

1. Anomalie-Erkennungssystem, umfassend:
   eine Steuerungsvorrichtung (100), umfassend:

   eine Steuerungsrecheneinheit (10, 130), die so konfiguriert ist, dass sie Steuerungsberechnung zum Steuern eines Steuerziels ausführt; und
   eine erste Anomalie-Erkennungseinheit (20, 150), die so konfiguriert ist, dass sie einen Zustandswert, der sich auf ein Überwachungsziel bezieht, aus den von der Steuerungsrecheneinheit gesammelten Zustandswerten an ein Modell zur Erkennung einer Anomalie bereitstellt, die bei dem Überwachungsziel auftreten können, wobei das Modell durch einen Anomalie-Erkennungsparameter und einen Lerndatensatz definiert ist;
   wobei die erste Anomalie-Erkennungseinheit enthält
   eine Berechnungseinheit (22), die so konfiguriert ist, dass sie eine Merkmalsgröße aus dem Zustandswert in Bezug auf das Überwachungsziel gemäß dem Anomalie-Erkennungsparameter berechnet und unter Verwendung der Merkmalsgröße einen Score berechnet, und
   eine Bestimmungseinheit (24), die so konfiguriert ist, dass sie eine Bestimmung unter Verwendung des von der Recheneinheit berechneten Scores und sowohl einer ersten Bestimmungsreferenz als auch einer zweiten Bestimmungsreferenz, die in dem Anomalie-Erkennungsparameter enthalten sind, durchführt, um ein erstes Bestimmungsergebnis auszugeben, wenn der Score mit der ersten Bestimmungsreferenz übereinstimmt, und um ein zweites Bestimmungsergebnis auszugeben, wenn der Score mit der zweiten Bestimmungsreferenz übereinstimmt, wobei die Steuerungsvorrichtung (100) ferner eine Zustandswert-Speichereinheit (140) umfasst, die so konfiguriert ist, dass sie mindestens den Zustandswert, der sich auf das Überwachungsziel bezieht, unter den von der Steuerungsrecheneinheit gesammelten Zustandswerten speichert;
   wobei das Anomalie-Erkennungssystem ferner eine Unterstützungsvorrichtung (200), anders als die Steuerungsvorrichtung (100), umfasst, umfassend:
   eine zweite Anomalie-Erkennungseinheit (286), die so konfiguriert ist, dass sie im Wesentlichen denselben Erkennungsprozess wie die erste Anomalie-Erkennungseinheit unter Verwendung des von der Zustandswert-Speichereinheit (140) bereitgestellten Zustandswerts ausführt; und
   eine Modellgenerierungseinheit (270), die so konfiguriert ist, dass sie den Anomalie-Erkennungsparameter und den Lerndatensatz bestimmt und den Anomalie-Erkennungsparameter und den Lerndatensatz für die erste Anomalie-Erkennungseinheit auf der Grundlage eines Erkennungsergebnisses der zweiten Anomalie-Erkennungseinheit festlegt,
   **dadurch gekennzeichnet, dass**
   die Modellgenerierungseinheit ein Mittel zum Anzeigen von Datenreihen eines Scores enthält, das aus einer oder einer Vielzahl von Merkmalsgrößen berechnet wird, die aus dem von der Zustandswert-Speichereinheit bereitgestellten Zustandswert erzeugt werden; und

ein Mittel zum Empfangen einer Einstellung von zwei Schwellenwerten für die Datenreihen des Scores als die erste Bestimmungsreferenz und die zweite Bestimmungsreferenz.

2. Anomalie-Erkennungssystem nach Anspruch 1,

wobei die Modellgenerierungseinheit (270) so konfiguriert ist, dass sie die erste Bestimmungsreferenz auf einen höheren Wert als die zweite Bestimmungsreferenz festlegt, und

wobei ein Anomalie-Grad des ersten Bestimmungsergebnisses höher als ein Anomalie-Grad des zweiten Bestimmungsergebnisses ist.

3. Anomalie-Erkennungssystem nach Anspruch 1, wobei die Modellgenerierungseinheit enthält ein Mittel zum Berechnen eines Indexwerts, angebend Erkennungsgenauigkeit auf der Grundlage eines Labels, zugewiesen jedem in der Datenreihe des Scores enthaltenen Element, und ein Bestimmungsergebnis, wenn eine von einem Benutzer bezeichnete Bestimmungsreferenz auf die Datenreihe des Scores angewendet wurde.

4. Anomalie-Erkennungssystem nach Anspruch 3, wobei der Indexwert, der die Erkennungsgenauigkeit angibt, enthält eines von

eine Übersehens-Rate, die die Wahrscheinlichkeit angibt, mit der fälschlicherweise bestimmt wird, dass ein Element normal ist,

eine Versehens-Rate, die die Wahrscheinlichkeit angibt, mit der fälschlicherweise bestimmt wird, dass ein Element anomal ist, und

eine Richtige-Antwort-Rate, die die Wahrscheinlichkeit angibt, mit der eine Bestimmung gemäß dem Label, zugewiesen dem Element, durchgeführt wird.

5. Anomalie-Erkennungssystem nach Anspruch 3 oder 4, wobei die Modellgenerierungseinheit so konfiguriert ist, dass sie einen Indexwert, der die Erkennungsgenauigkeit angibt, aktualisiert, wenn ein festgelegter Schwellenwert geändert wird.

6. Anomalie-Erkennungssystem nach einem der Ansprüche 1 bis 5, ferner umfassend eine Benachrichtigungsvorrichtung (18), die so konfiguriert ist, dass sie einen Benachrichtigungsvorgang in einer Form gemäß einem Bestimmungsergebnis der Bestimmungseinheit durchführt.

7. Unterstützungsvorrichtung (200), die so konfiguriert ist, dass sie mit einer Steuerungsvorrichtung (100) zum Steuern eines Steuerziels verbunden ist, wobei die Steuerungsvorrichtung eine Steuerungsrecheneinheit (130) umfasst, die so konfiguriert ist, dass sie Steuerungsberechnung zum Steuern des Steuerziels ausführt; und eine erste Anomalie-Erkennungseinheit (150), die so konfiguriert ist, dass sie einen Zustandswert, der sich auf ein Überwachungsziel bezieht, aus den von der Steuerungsrecheneinheit gesammelten Zustandswerten an ein Modell zur Erkennung einer Anomalie bereitstellt, die in dem Überwachungsziel auftreten kann, wobei das Modell durch einen Anomalie-Erkennungsparameter und einen Lerndatensatz definiert ist; und eine Zustandswert-Speichereinheit (140), die so konfiguriert ist, dass sie mindestens den Zustandswert, der sich auf das Überwachungsziel bezieht, unter den von der Steuerungsrecheneinheit gesammelten Zustandswerten speichert,

wobei die Unterstützungsvorrichtung enthält

eine zweite Anomalie-Erkennungseinheit (286), die so konfiguriert ist, dass sie im Wesentlichen denselben Erkennungsprozess wie die erste Anomalie-Erkennungseinheit unter Verwendung des von der Zustandswert-Speichereinheit bereitgestellten Zustandswerts ausführt, und

eine Modellgenerierungseinheit (270), die so konfiguriert ist, dass sie den Anomalie-Erkennungsparameter und den Lerndatensatz bestimmt und den Anomalie-Erkennungsparameter und den Lerndatensatz für die erste Anomalie-Erkennungseinheit auf der Grundlage eines Erkennungsergebnisses der zweiten Anomalie-Erkennungseinheit festlegt, und

wobei die Modellgenerierungseinheit ein Mittel zum Anzeigen der Datenreihe eines Scores enthält, der aus einer oder einer Vielzahl von Merkmalsgrößen berechnet wird, die aus dem von der Zustandswert-Speichereinheit bereitgestellten Zustandswert erzeugt werden, und ein Mittel zum Empfangen einer Einstellung von zwei Schwellenwerten für die Datenreihen des Scores als die erste Bestimmungsreferenz und die zweite Bestimmungsreferenz.

**8.** Verfahren zur Erkennung von Anomalien, umfassend:

Ausführen einer Steuerungsberechnung zum Steuern eines Steuerziels durch eine Steuerungsvorrichtung (100); und

Bereitstellen eines Zustandswerts, der sich auf ein Überwachungsziel bezieht, aus den von der Steuerungsvorrichtung gesammelten Zustandswerten durch die Steuerungsvorrichtung (100) an ein Modell zum Erkennen einer Anomalie, die in dem Überwachungsziel auftreten kann, wobei das Modell durch einen Anomalie-Erkennungsparameter und einen Lerndatensatz definiert ist,

wobei das Erkennen einer Anomalie Berechnen eines Scores durch die Steuerungsvorrichtung (100) unter Verwendung einer Merkmalsgröße enthält, die aus dem Zustandswert berechnet wird, der sich auf das Überwachungsziel bezieht, wobei die Merkmalsgröße gemäß dem Anomalie-Erkennungsparameter berechnet wird;

Durchführen einer Bestimmung unter Verwendung des berechneten Scores und sowohl einer ersten Bestimmungsreferenz als auch einer zweiten Bestimmungsreferenz, die in dem Anomalie-Erkennungsparameter enthalten sind; und

Ausgeben eines ersten Bestimmungsergebnisses, wenn der berechnete Score mit der ersten Bestimmungsreferenz übereinstimmt, und Ausgeben eines zweiten Bestimmungsergebnisses, wenn der berechnete Score mit der zweiten Bestimmungsreferenz übereinstimmt,

wobei das Anomalie-Erkennungsverfahren

**gekennzeichnet ist durch**:

Speichern, in einer Zustandswert-Speichereinheit (140), mindestens den Zustandswert, der sich auf das Überwachungsziel bezieht, unter den **durch** die Steuerungsberechnung gesammelten Zustandswerten;

Ausführen, **durch** eine Unterstützungsvorrichtung (200), anders als die Steuerungsvorrichtung (100), im Wesentlichen desselben Erkennungsprozesses unter Verwendung des Zustandswerts;

Bestimmen des Anomalie-Erkennungsparameters und des Lerndatensatzes auf der Grundlage eines Erkennungsergebnisses;

Anzeigen einer Datenreihe eines Scores, berechnet aus einer oder einer Vielzahl von Merkmalsgrößen, die aus dem von der Zustandswert-Speichereinheit bereitgestellten Zustandswert erzeugt werden; und

Empfangen einer Einstellung von zwei Schwellenwerten für die Datenreihe des Scores als die erste Bestimmungsreferenz und die zweite Bestimmungsreferenz.

## Revendications

**1.** Système de détection d'anomalies comprenant:

Un dispositif de commande (100) comprenant:

une unité de calcul de commande (10, 130) qui exécute un calcul de commande pour commander une cible de commande ; et

une première unité de détection d'anomalies (20, 150) configurée pour fournir une valeur d'état liée à une cible de surveillance parmi les valeurs d'état collectées par l'unité de calcul de commande à un modèle pour détecter une anomalie qui peut se produire dans la cible de surveillance, dans lequel le modèle est défini par un paramètre de détection d'anomalies et un ensemble de données d'apprentissage ; dans lequel la première unité de détection d'anomalie comprend une unité de calcul (22) configurée pour calculer une quantité caractéristique à partir d'une valeur d'état liée à la cible de surveillance selon le paramètre de détection d'anomalie, et pour calculer un score à l'aide de la quantité caractéristique, et une unité de détermination (24) configurée pour effectuer une détermination à l'aide du score calculé par l'unité de calcul et à la fois d'une première référence de détermination et d'une deuxième référence de détermination incluses dans le paramètre de détection d'anomalie, pour produire un premier résultat de détermination lorsque le score correspond à la première référence de détermination, et pour produire un deuxième résultat de détermination lorsque le score correspond à la deuxième référence de détermination, dans lequel le dispositif de commande (100) comprend en outre Une unité de stockage de valeurs d'état (140) configurée pour stocker au moins une valeur d'état liée à la cible de surveillance parmi les valeurs d'état collectées par l'unité de calcul de contrôle ; Dans lequel le système de détection d'anomalies comprend en outre un dispositif de support (200), autre que le dispositif de commande (100), comprenant : une deuxième unité de détection d'anomalies (286) qui exécute sensiblement le même processus de détection que la première unité de détection d'anomalies en utilisant la valeur d'état fournie par l'unité de stockage de valeurs d'état (140) ; et une unité de génération de modèle (270) configurée pour déterminer le paramètre de détection d'anomalie et l'ensemble de données d'apprentissage, et pour définir le paramètre de détection d'anomalie et l'ensemble de données d'apprentissage pour la première unité de détection d'anomalie sur la base d'un résultat de détection de la deuxième unité de détection d'anomalie, **caractérisé en ce que** l'unité de génération de modèle comprend un moyen pour afficher des séries de données du score calculé par une ou plusieurs quantités caractéristiques qui sont générées à partir des valeurs d'état fournies par l'unité de stockage de valeurs d'état ; et un moyen pour recevoir un réglage de deux valeurs seuils pour les séries de données du score en tant que première référence de détermination et deuxième référence de détermination.

2. Système de détection d'anomalies selon la revendication 1, dans lequel l'unité de génération de modèle (270) est configurée pour définir la première référence de détermination afin qu'elle ait une valeur supérieure à la deuxième référence de détermination, et dans lequel le degré d'anomalie du premier résultat de détermination est supérieur au degré d'anomalie du deuxième résultat de détermination.

3. Système de détection d'anomalies selon la revendication 1, dans lequel l'unité de génération de modèle comprend un moyen pour calculer une valeur d'indice indiquant la précision de détection sur la base d'une étiquette attribuée à chaque élément inclus dans la série de données du score et d'un résultat de détermination lorsqu'une référence de détermination désignée par un utilisateur a été appliquée à la série de données du score.

4. Système de détection d'anomalies selon la revendication 3, dans lequel la valeur d'indice indiquant la précision de détection comprend l'un des éléments suivants un taux d'omission qui est une probabilité de déterminer de manière incorrecte qu'un élément est normal, un taux de négligence qui est une probabilité de déterminer de manière incorrecte qu'un élément est anormal, et un taux de réponse correcte qui est une probabilité qu'une détermination selon l'étiquette attribuée à l'élément soit effectuée.

5. Système de détection d'anomalies selon la revendication 3 ou 4, dans lequel l'unité de génération de modèle est configurée pour mettre à jour une valeur d'indice indiquant la précision de détection lorsqu'une valeur seuil définie est modifiée.

6. Système de détection d'anomalies selon l'une quelconque des revendications 1 à 5, comprenant en outre un dispositif de notification (18) configuré pour effectuer une opération de notification sous une forme conforme à un résultat de détermination provenant de l'unité de détermination.

7. Dispositif de support (200) qui est connecté à un dispositif de commande (100) pour commander une cible de commande, dans lequel le dispositif de commande comprend une unité de calcul de commande (130) configurée pour exécuter un calcul de commande afin de commander la cible de commande ; et une première unité de détection d'anomalie (150) configurée pour fournir une valeur d'état liée à une cible de surveillance parmi les valeurs d'état collectées par l'unité de calcul de commande à un modèle pour détecter une anomalie pouvant se produire dans la cible de surveillance ; dans lequel le modèle est défini par un paramètre de détection d'anomalie et un ensemble de données d'apprentissage ; et une unité de stockage de valeurs d'état (140) configurée pour stocker au moins la valeur d'état liée à la cible de surveillance parmi les valeurs d'état collectées par l'unité de calcul de commande, le dispositif de support comprend une deuxième unité de détection d'anomalie (286) configurée pour exécuter sensiblement le même processus de détection que la première unité de détection d'anomalie en utilisant la valeur d'état fournie par l'unité de stockage de valeurs d'état, et une unité de génération de modèle (270) configurée pour déterminer le paramètre de détection d'anomalie et pour définir le paramètre de détection d'anomalie et l'ensemble de données d'apprentissage pour la première unité de détection d'anomalie sur la base d'un résultat de détection de la deuxième unité de détection d'anomalie, et l'unité de génération de modèle comprend un moyen pour afficher une série de données du score calculé par une ou plusieurs quantités caractéristiques générées à partir des valeurs d'état fournies par l'unité de stockage de valeurs d'état, et un moyen pour recevoir un réglage de deux valeurs seuils pour la série de données du score en tant que première référence de détermination et deuxième référence de détermination.

8. Procédé de détection d'anomalies comprenant :
l'exécution, par un dispositif de commande (100), d'un calcul de commande pour commander une cible de commande ; et fournir, par le dispositif de commande (100), une valeur d'état liée à une cible de surveillance parmi les valeurs d'état collectées par le dispositif de commande à un modèle pour détecter une anomalie qui peut se produire dans la cible de surveillance, dans lequel le modèle est défini par un paramètre de détection d'anomalie et un ensemble de données d'apprentissage, dans lequel la détection d'une anomalie comprend le calcul, par le dispositif de commande (100), d'un score à l'aide d'une quantité caractéristique qui est calculée à partir d'une valeur d'état liée à la cible de surveillance, la quantité caractéristique étant calculée selon le paramètre de détection d'anomalie ; effectuer une détermination en utilisant le score calculé et à la fois une première référence de détermination et une deuxième référence de détermination incluses dans le paramètre de détection d'anomalie ; et émettre un premier résultat de détermination lorsque le score calculé correspond à la première référence de détermination, et émettre un deuxième résultat de détermination lorsque le score calculé correspond à la deuxième référence de détermination, le procédé de détection d'anomalie étant **caractérisé en ce que** :stocker, dans une unité de stockage de valeurs d'état (140), au moins la valeur d'état liée à la cible de surveillance parmi les valeurs d'état collectées par l'unité de calcul de contrôle ;exécuter, à l'aide d'un dispositif de support (200) autre que le dispositif de contrôle (100), essentiellement le même processus de détection à l'aide de l'état :déterminer le paramètre de détection d'anomalie et l'ensemble de données d'apprentissage sur la base d'un résultat de détection ;afficher des séries de données d'un score calculé à partir d'une ou plusieurs quantités caractéristiques qui sont générées à partir de la valeur d'état fournie par l'unité de stockage de valeurs d'état ; et recevoir un réglage de deux valeurs seuils pour les séries de données du score en tant que première référence de détermination et deuxième référence de détermination.

FIRST
DETERMINATION
REFERENCE

SECOND
DETERMINATION
REFERENCE

20

FIRST
DETERMINATI
ON RESULT

SECOND
DETERMINATI
ON RESULT

DETERMINATION
UNIT

24

SCORE

ABNORMALITY
DETECTION PARAMETER

CALCULATION
UNIT

22

LEARNING DATA SET

10

CONTROL
COMPUTING UNIT

· · ·

STATE VALUE

CONTROL TARGET
(INCLUDING: MONITORING TARGET)

# FIG. 1

FIG. 2

| ST1 | | ST2 | | ST3 |
|---|---|---|---|---|
| (1) RAW DATA COLLECTION WRITE DATA TO TIME-SERIES DATABASE | RAW DATA | (2) ANALYSIS GENERATE ABNORMALITY DETECTION PARAMETER AND LEARNING DATA SET | ABNORMALITY DETECTION PARAMETER (INCLUDING: THRESHOLD VALUE)  LEARNING DATA SET | (3) OPERATION FEATURE QUANTITY → ABNORMALITY DETECTION MONITORING |

FIG. 3

FIG. 4

CONTROL DEVICE  200

| PROCESSOR 202 | MAIN STORAGE DEVICE 206 | INPUT UNIT 216 | DISPLAY UNIT 218 | LOCAL NETWORK CONTROLLER 214 |

220

208

222 — DEVELOPMENT PROGRAM
224 — PLC INTERFACE PROGRAM
226 — ANALYSIS PROGRAM
228 — OS

204 OPTICAL DRIVE
212 USB CONTROLLER
205
CONTROL DEVICE

FIG. 5

FIG. 6

EP 3 547 057 B1

**FIG. 7**

FIG. 8

FIG. 9

ABNORMALITY
DETECTION PROCESS

IS A START CONDITION
OF FRAME SATISFIED? — S50 — NO

↓ YES

START COLLECTION OF ONE OR
PLURALITY OF STATE VALUES — S52

IS AN END CONDITION
OF FRAME SATISFIED? — S54 — NO

↓ YES

EXTRACT PREDETERMINED TYPE OF A
FEATURE QUANTITY FROM EACH OF
TIME SERIES DATA OF COLLECTED
STATE VALUES — S56

CALCULATE A SCORE ON BASIS OF ONE
OR PLURALITY OF CALCULATED
FEATURE QUANTITIES — S58

DOES THE CALCULATED SCORE
EXCEED A FIRST THRESHOLD
VALUE? — S60 — YES

↓ NO

DOES THE CALCULATED SCORE
EXCEED A SECOND THRESHOLD
VALUE? — S64 — YES

↓ NO — S68

DETERMINE THAT A
MONITORING
TARGET IS NORMAL

NOTIFY OF
ABNORMALITY OF A
LEVEL
CORRESPONDING TO
THE SECOND
THRESHOLD VALUE — S66

NOTIFY OF
ABNORMALITY OF A
LEVEL
CORRESPONDING TO
THE FIRST
THRESHOLD VALUE — S62

# FIG. 10

| RAW DATA → | ANALYSIS (GENERATE ABNORMALITY DETECTION PARAMETER, AND LEARNING DATA SET) | | | | | → CONFIGURATION |
|---|---|---|---|---|---|---|
| | (A) DATA INPUT | (B) FEATURE QUANTITY GENERATION | (C) VISUALIZATION AND LABELING | (D) FEATURE QUANTITY SELECTION | (E) THRESHOLD VALUE DETERMINATION | |

FIG. 11

FIG. 12

FIG. 13

FIG. 14

FIG. 15

FIG. 16

| | KURTOSIS | LOGISTIC REGRESSION | DECISION TREE | INTEGRATION | RANK |
|---|---|---|---|---|---|
| FEATURE QUANTITY 1 | 0.2584 | 0.6345 | 0.5919 | 0.4949 | 1 |
| FEATURE QUANTITY 2 | 0.1728 | 0.4483 | 0.4469 | 0.3560 | 2 |
| FEATURE QUANTITY 3 | 0.3586 | 0.1285 | 0.2688 | 0.2520 | 3 |
| FEATURE QUANTITY 4 | 0.4164 | 0.0337 | 0.2457 | 0.2319 | 4 |
| FEATURE QUANTITY 5 | 0.1247 | 0.5982 | 0.4039 | 0.3756 | 5 |
| FEATURE QUANTITY 6 | 0.2504 | 0.1592 | 0.1974 | 0.2023 | 6 |
| ⋮ | ⋮ | ⋮ | ⋮ | ⋮ | ⋮ |

700    702    704    706    708    710

## FIG. 17

FIG. 18

| FEATURE QUANTITY 1 | FEATURE QUANTITY 1 |
|---|---|
| 10 | -20 |
| 10 | 0 |
| 10 | 20 |
| 20 | -20 |
| 20 | 0 |
| 20 | 20 |
| 30 | -20 |
| 30 | 0 |
| 30 | 20 |

# FIG. 19

LABEL

|  | | ABNORMAL | NORMAL |
|---|---|---|---|
| DETERMINATION RESULT | ABNORMAL | TRUE POSITIVE: TP | FALSE POSITIVE: FP (TYPE 1 ERROR) |
| | NORMAL | FALSE NEGATIVE: FN (TYPE 2 ERROR) | TRUE NEGATIVE TN |

# FIG. 20

| Cycle | Torq1_ave | Torq1_sd | Torq1_max | Cyn1_on | LABEL | SCORE | DETERMIN ATION RESULT | EVALUA TION |
|---|---|---|---|---|---|---|---|---|
| 34 | 14.54 | 3.51 | 32.14 | 240.8 | NORMAL | 0.56 | NORMAL | TP |
| 35 | 14.53 | 3.54 | 32.18 | 241.1 | NORMAL | 0.54 | ABNORMAL | FN |
| 36 | 14.55 | 3.56 | 33.44 | 240.4 | NORMAL | 0.57 | NORMAL | TP |
| 37 | 14.51 | 3.39 | 38.87 | 240.9 | NORMAL | 0.49 | NORMAL | TP |
| 38 | 14.57 | 3.42 | 37.1 | 240.5 | ABNORMAL | 0.65 | ABNORMAL | TN |
| 39 | 14.55 | 3.45 | 32.8 | 240.7 | NORMAL | 0.55 | NORMAL | TP |
| : | : | : | : | : | : | : | : | |
| 126 | 14.54 | 3.53 | 37.54 | 240.3 | ABNORMAL | 0.58 | NORMAL | FP |

900

902 904 906

UPDATE EVERY CHANGE
OF THRESHOLD VALUE

908

CORRECT ANSWER RATE:
(TP+TN) / TOTAL NUMBER OF
SAMPLES
OVERLOOK RATE: FN/ (TP+FN)
OVERSIGHT RATE: FP/ (FP+TN)

REFERENCE

STATE VALUE
(FEATURE QUANTITY)

OUTPUT
(SCORE)

DETERMINATION
RESULT

ABNORMALITY
DETECTION ENGINE

THRESHOLD VALUE
SETTING/CHANGE

FIG. 22

FIG. 23

FIG. 24

FIG. 25

**REFERENCES CITED IN THE DESCRIPTION**

**Patent documents cited in the description**

- JP 7043352 A
- EP 1021263 A
- EP 2884363 A
- WO 2018030422 A2